# EUROPEAN PATENT SPECIFICATION

(11) **EP 4 107 613 B1**
(45) Date of publication and mention of the grant of the patent: **25.03.2026**
(21) Application number: 21701088.3
(22) Date of filing: 18.01.2021
(51) Int. Cl.: G06F 7/544, G06F 12/0802, G06F 12/0891, G06F 16/2453, G06F 7/02

(54) **CONTROLLER FOR A CACHE AND METHOD FOR CONTROLLING A CACHE**
STEUERUNG FÜR EINEN CACHE UND VERFAHREN ZUR STEUERUNG EINES CACHE
DISPOSITIF DE COMMANDE POUR MÉMOIRE CACHE ET PROCÉDÉ DE COMMANDE D'UNE MÉMOIRE CACHE

(43) Date of publication of application: 28.12.2022
(73) Proprietor: Huawei Technologies Co., Ltd., Shenzhen, Guangdong 518129, (CN)
(72) Inventor: GALLO, Massimo, 80992 Munich (DE); SIMON, Gwendal, 80992 Munich (DE); ROSSI, Dario, 80992 Munich (DE); FINAMORE, Alessandro, 80992 Munich (DE)
(74) Representative: Roth, Sebastian
(86) International application number: PCT/EP2021/050902
(87) International publication number: WO 2022/152397

(56) References cited:
- CN-A- 111 367 952
- US-A1- 2014 280 293
- US-B1- 7 302 425
- FABRIZIO FALCHI ET AL: "A metric cache for similarity search", LARGE-SCALE DISTRIBUTED SYSTEMS FOR INFORMATION RETRIEVAL, ACM, 2 PENN PLAZA, SUITE 701 NEW YORK NY 10121-0701 USA, 30 October 2008 (2008-10-30), pages 43 - 50, XP058353544, ISBN: 978-1-60558-254-2, DOI: 10.1145/1458469.1458473

## Description

### TECHNICAL FIELD

The present disclosure relates to a controller for a cache, a system comprising such a controller, and a cache, and a method for controlling a cache.

### BACKGROUND

A cache may be used in systems, e.g. a computer network comprising one or more client computers (clients) and one or more service computers (services). In particular, a cache may be used in such system for storing outputs of a computation unit (e.g. a service computer), which the computation unit has computed in response to an input query. A cache allows reducing the time for providing an output of the computation unit in response to a corresponding input query in case the input query has been already received in the past and, thus, the cache already stores the output. In particular, the time for providing the output is reduced by the time needed for computing the output by the computation unit. The cache may be also referred to by the term "cache memory" or "cache storage".

Document CN 111 367 952 A discloses an cache data paging query method, system and computer readable storage medium.

### SUMMARY

Embodiments of the invention base further on the following considerations made by the inventors:
For explaining the function and interaction of a cache, a cache controller for the cache, a query unit and a computation unit, a scenario is considered, according to which the computation unit is an analytics service configured to run an analytics function F() on an input query. Further, the query unit is assumed to be a client configured to provide an input query for which the analytics service computes an output (analytics output). That is the client may trigger an input query to the analytics service, which applies the analytics function F() on the input query and returns the output to the client. In case the client sends the same input query twice, the analytics service processes said input query twice. A traditional way to improve efficiency thereof is the implementation of a cache between the client and the analytics service. The cache alleviates the load on the analytics service by storing the mapping between the input query and the output discovered when triggering input queries (may be called input requests) to the analytics service on behalf of the client. The terms "store" and "save" may be used as synonyms. In this way, when the client issues an input query for an already processed input that is stored in the cache (cache hit), the cache, in particular the controller controlling the cache, immediately serves the output to the client avoiding to invoke the analytics service. The controller issues a request for the analytics service to compute the output only if it cannot serve the input query (cache miss), because the cache does not store the output.

The cache may be considered as a catalog of pairs comprising a key and a value (i.e. key-value-pairs), wherein the key corresponds to the input query, and the value corresponds to the output computed by the analytics service for each specific input query. The larger the catalog, i.e. the larger the storage/memory space of the cache, the more input queries may be served by the cache and, thus, the better the system performance (i.e. the lower the load on the analytics service, the smaller the query response time).

The client, controller for the cache, the cache and the service may be on the same machine (hence communicating via system calls, inter process communication, etc.) or placed across a network (hence communicating via remote procedure calls, specific network protocols, etc.).

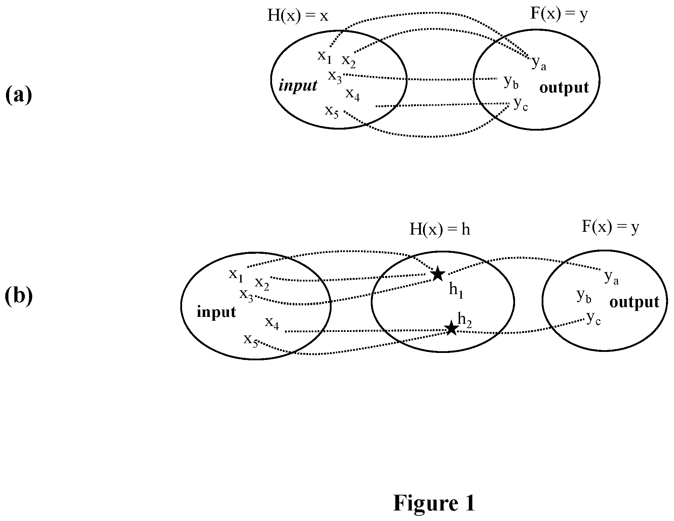

The present disclosure is, in particular, directed to an approximate cache, which is a particular type of cache. The input-output mapping logic (i.e. mapping between input queries of the client and respective outputs of the service) of approximate caches is different from typical caches, which are also referred to as exact caches. Figures 1 (a) and (b) show an example of a mapping of two different cache types, in particular of an exact cache and an approximate cache. In Figures 1 (a) and (b) the presence of a function H() is indicated which may be applied to the input query received by the controller for the cache from the client. This function is different for an exact cache (i.e. exact caching logic) exemplarily shown in Figure 1 (a) and for an approximate cache (i.e. approximate caching logic) exemplarily shown in Figure 1 (b).

As indicated in Figure 1 (a), when receiving an input query, the controller for the cache looks for an exact match between the received input query and the keys stored in the catalog of the cache. For example, when the controller receives the input query x₁ (i.e. when querying for x₁), the controller may check whether x₁ is identical to one of the keys in the catalog of the cache. If a cache entry comprising the key x₁ is found (cache hit) the stored output yₐ (stored as the value of said cache entry) is returned by the controller. Otherwise (cache miss) the controller may request the analytics service to compute the output yₐ and store the computed output yₐ in association with the input request x₁ as a cache entry in the cache. That is, the controller may invoke the analytics service, retrieve the output yₐ from the analytics service and add the input query x₁ and output yₐ as a key-value pair to the catalog of the cache (e.g. key-value pair = (key, value) = (x₁, yₐ)). Thus, a key-value pair of the catalog of the cache corresponds to a cache entry of the cache.

This is equivalent to the controller for the cache applying an identity function H(x) = x on the received input query before consulting the cache, in particular the catalog of the cache. That is, with respect to exact caching, there is no transformation on the input queries when searching for cache entries in the cache. Hence, there has to be an exact match between the received input query and an input query previously processed by the controller and, thus, stored in the cache for taking advantage of previous analytics execution (i.e. outputs previously computed by the service). This is exemplarily shown in Figure 1 (a), according to which the cache comprises for each of the input queries x₁, x₂, x₃, x₄ and x₅ a cache entry and, thus, stores for each of these input queries a respective output previously computed by the service. In particular, as shown in Figure 1 (a), for the input queries x₁ and x₂ the service computes the same output, namely the output yₐ. Thus, both, the input query x₁ and x₂, are mapped by the cache to the output yₐ. For the input query x₃ the service computes the output y_{b} and, thus, the input query x₃ is mapped by the cache to the output y_{b}. For the input queries x₄ and x₅ the service computes the same output, namely the output y_{c}. Thus, both, the input query x₄ and x₅, are mapped by the cache to the output yₐ.

As indicated in Figure 1 (b), with regard to approximate caching, when receiving an input query, the controller for the cache looks for an approximate match between the input query and the keys stored in the catalog of the cache. For example, as shown in Figure 1 (b), the input queries x₁, x₂, x₃ are considered approximation of each other because they are mapped to the same approximate input h₁, and as a result they all share the same output value yₐ. The term "approximate value" may be used as a synonym for the term "approximate input". Assuming, without loss of generality, that the input query x₁ is not stored in the cache but either x₂ or x₃ are in the catalog of the cache (i.e. stored in the cache). When querying for x₁ (i.e. the controller receives the input query x₁) the controller returns the output yₐ (cache hit) from the cache since an approximate function H(x) indicates that the input query x₂ or x₃ are considered "to approximate" the input query x₁ well enough so that there is no need to request the service to perform a computation, in particular run the analytics, specifically on the received input query x₁.

For approximate caching, the controller for the cache applies an approximate function H(x) = h on the received input query when consulting the cache, in particular the catalog of the cache. That is, a transformation on the input queries is applied when searching for cache entries in the cache. An input query may be identical or sufficiently close to an input query previously processed by the controller and, thus, stored in the cache in the form of an approximate input for taking advantage of previous analytics execution (i.e. outputs previously computed by the service). This is exemplarily shown in Figure 1 (b), according to which the cache comprises for the input queries x₁, x₂ and x₃ and for the input queries x₄ and x₅ a cache entry and, thus, stores for each of these input queries groups a respective approximate input and respective output previously computed by the service. In particular, as shown in Figure 1 (b), the input queries x₁, x₂ and x₃ are mapped by the approximate function H(x) to the approximate input h₁, which is mapped to the output yₐ. The input queries x₄ and x₅ are mapped by the approximate function H(x) to the approximate input h₂, which is mapped to the output y_{c}.

As shown above, the main advantage of approximate caching compared to exact caching is that it may reduce the query response time. Namely, for example in case the controller for the cache has received already in the past the input query x₁, the cache stores already the output yₐ computed for the input query x₁. Next, when the cache is an exact cache and the controller receives the input query x₂, which is assumed to be not already stored in the cache, the controller cannot read the respective output yₐ from the cache, but the controller requests the service to compute the output yₐ. In contrast thereto, when the cache is an approximate cache, the controller reads the respective output yₐ from the cache, because the approximate input h₁, to which the input queries x₁, x₂ and x₃ are mapped to by the function H(x) = h, is already stored in association with the respective output yₐ, as a result of the previous input query request x₁. Therefore, no computation by the service for the input request x₂ is needed in case of the approximate caching, reducing the query response time

A main disadvantage of approximate caching is that it may introduce errors, whereas exact caching is error free. In Figure 1 (b) an example of such an error may be seen, when comparing Figures 1 (a) and (b) with each other. Namely, as shown in Figure 1 (a), using exact matching the input query x₃ is mapped to the output y_{b}. In contrast thereto, as shown in Figure 1 (b), using approximate caching, the input query x₃ may be erroneously mapped to the output yₐ because of the approximation performed by the approximate function H(x) that maps the input queries x₁, x₂, x₃ to the same approximate input h₁.

Such errors may occur because the logic used by approximate caching is based on identifying similarities among input queries (respectively input values) without considering how such inputs map to output values. In other words, if for example the two input queries x₁ and x₃ are similar to each other, an approximate mapping logic would map these two input queries to the same output value yₐ without actually checking whether x₁ and x₃ indeed map to the same output yₐ. This may not be the case, as shown in Figure 1 (a) and (b). Namely, according to Figure 1 (a), the input query x₁ maps to yₐ, whereas the input query x₃ maps to y_{b}.

In real life implementations, the approximate function H(x) may be applied in a geometrical space. In such a case, the input queries may be points in a hyperspace (i.e. each input query may be represented by a set of metrics, each corresponding to a different dimension in the hyperspace). A distance metric, e.g. d(xᵢ, xⱼ), may be used to quantify how far two of such points xᵢ and xⱼ are away from each other. A threshold T on the metric may define the approximation between two input queries. For example, in case the distance between the two points xᵢ and xⱼ is smaller than the threshold T (d(xᵢ, xⱼ) < T), then the input queries xⱼ and xᵢ may be approximation of each other. That is, in this case the input queries xⱼ and xᵢ would be mapped to the same approximate input.

The aforementioned approximate caching logic focuses on the input queries. In the example of Figure 1 (b), the input queries x₁, x₂, x₃ may indeed be close to each other, yet x₃ should map to y_{b} and not yₐ. It follows that the aforementioned real life implementation cannot perform proper error control for approximate caching, because the logic of the cache operates only on the input queries.

The above is also valid in case of a different type of query unit and computation unit. That is, the above is not limited to the case, in which the query unit is a client (e.g. client computer) and the computation unit is a service (e.g. service computer), in particular an analytics service.

In view of the above-mentioned problems and disadvantages, embodiments of the invention aim to provide a controller for a cache that comprises the advantage of approximate caching and reduces the above described disadvantage of approximate caching. In particular, an objective is to provide a controller for a cache that allows caching with a reduced query response time compared to exact caching, while reducing errors introduced by approximate caching.

The objective is achieved by the embodiments of the invention as described in the enclosed independent claims. Advantageous implementations of the embodiments of the invention are further defined in the dependent claims.

A first aspect of the present disclosure provides a controller for a cache, the cache is configured to store one or more outputs of a computation unit. The controller is configured to map input queries to one or more approximate inputs. For each of the one or more approximate inputs, the controller is configured to store, in the cache, the approximate input in association with a respective output of the one or more outputs and a respective state information as a cache entry. The respective state information comprises information for monitoring validity of a mapping of the approximate input to the respective output of the cache entry. Two or more input queries comprising at least one common characteristic are mapped to the same approximate input.

The controller of the first aspect allows to solve the above objective, because the controller may perform approximate caching for controlling respectively managing the cache. By including in each cache entry, a respective state information comprising information for monitoring the validity of the mapping of the respective approximate input of the cache entry to the respective output of the cache entry, the controller allows identifying errors in the mapping and, thus, allows reducing these errors. Therefore, the controller allows reducing the errors introduced by approximate caching. For identifying errors, one needs to consider how input queries are mapped to output values. This is achieved by the respective state information that allows monitoring the validity of the mapping of the approximate input to the respective output of the cache entry.

In particular, the controller is configured to map the input queries to the one or more approximate inputs such that an input query is mapped to only one approximate input. That is, the controller may be configured to map the input queries to the one or more approximate inputs such that each input query is mapped to only one respective approximate input.

Two or more input queries comprising at least one common characteristic are mapped to the same approximate input. In case the two or more input queries are vectors, the at least one common characteristic may be one or more common elements of the vectors, optionally after applying at least one mathematical operation to the vectors. An example of such a mathematical operation is rounding of the elements of the vectors to a (certain) digit. In particular, the controller is configured to map the input queries to the one or more approximate inputs using an approximate function. The controller may be configured to generate respectively compute the respective approximate input for a received input query by applying the approximate function to the received input query. In other words, the controller may be configured to map the received input query to the respective approximate input by applying the approximate function to the received input query. The approximate function may comprise or correspond to at least one mathematical operation, such as rounding to a (certain) digit. The approximate function may be a prefix operation extracting a number of first elements of an input query, to which the approximate function is applied to. The number may be greater or equal to two. For example, the prefix operation may extract the first three elements of the input query. The two or more input queries may be arrays, wherein the above description with regard to vectors is correspondingly valid.

In particular, the cache entry maps the approximate input to the respective output of the one or more outputs. The respective state information of the cache entry may comprise information on a number of input queries since the computation, by the computation unit, of the respective output of the cache entry.

The controller may be implemented by hardware and/or software. The controller may comprise or correspond to at least one of a processor, microprocessor, microcontroller, field programmable gate array (FPGA), application specific integrated circuit (ASIC) and any other controller known by the skilled person. In particular, the controller is configured to control the cache according to approximate cache logic. The cache may be implemented by hardware and/or software. The cache may be referred to as approximate cache.

The computation unit may comprise or correspond to a service, in particular analytics service. The computation unit may be implemented by hardware and/or software. The computation unit may comprise or correspond to a service computer. In particular, the controller is configured to receive the input queries from a request unit. The request unit may be a client, in particular a client computer. The computation unit and the request unit each may be implemented by hardware and/or software.

In particular, the present disclosure proposes a controller for a cache, the cache is configured to store one or more outputs of a computation unit, wherein the controller is configured to map two or more input queries, optionally comprising at least one common characteristic, to an approximate input. Further, the controller may be configured to map the approximate input to an output of the one or more outputs, the output being computed by the computation unit for an input query of the two or more input queries. Furthermore, the controller may be configured to store, in the cache, the approximate input in association with the computed output and a state information as a cache entry. The state information comprises information for monitoring the validity of the mapping of the approximate input to the output of the cache entry.

In an implementation form of the first aspect, the controller is configured to monitor the validity of the mapping of the approximate input to the respective output of the cache entry based on the respective state information of the cache entry.

As a result of monitoring the validity of the mapping of the approximate input to the respective output of the cache entry based on the respective state information of the cache entry, the controller may identify errors in the mapping. This allows reducing these errors.

In an implementation form of the first aspect, in response to receiving an input query mapped to the approximate input of the cache entry, the controller is configured to, dependent on the respective state information of the cache entry, request the computation unit to compute, for the input query, an output of the one or more outputs.

This has the advantage that in case the respective state information of the cache entry suggests respectively indicates an error or a situation favoring an error in the mapping of the approximate input of the cache entry to the respective output of the cache entry for the received input query, the controller may request the computation unit to compute, for the received input query, an output. The controller may update the respective output, to which the approximate input is mapped to, with the computed output in order to eliminate a possible error in the mapping. The terms "update" and "refresh" may be used as synonyms. The terms "dependent on" and "depending on" may be used as synonyms.

In an implementation form of the first aspect, two or more input queries comprising at least one common characteristic are mapped to the same approximate input, and the two or more input queries are vectors each comprising two or more elements. The at least one common characteristic of the two or more input queries may comprise or correspond to one or more elements that are the same for each of the vectors. In addition or alternatively, the at least one common characteristic of the two or more input queries may comprise or correspond to one or more elements that are the same for each of the vectors after performing at least one mathematical operation on each of the vectors.

In particular, the one or more elements are at the same position in each of the vectors and comprise values that are the same for each of the vectors. In case that the one or more elements are two or more elements, the two or more elements may be consecutive elements. The at least one mathematical operation may be for example a rounding to a (certain) digit of the one or more elements, in particular of each element, of the vectors being the two or more input queries. The mathematical operation may correspond or be part of an approximate function that may be used by the controller for mapping the two or more input queries comprising at least one common characteristic to the same approximate input. The two or more input queries may be arrays, wherein the above description with regard to vectors is correspondingly valid.

In an implementation form of the first aspect, in response to receiving an input query of the input queries, the controller is configured to store, in the cache, the received input query in association with an approximate input of the one or more approximate inputs, wherein the received input query is mapped to the approximate input.

In particular, when receiving an input query of the input queries, the controller is configured to store, in the cache, the received input query as part of the respective state information in association with an approximate input of the one or more approximate inputs, wherein the received input query is mapped to the approximate input.

In an implementation form of the first aspect, the controller is configured to receive an input query of the input queries from a query unit and determine, for the input query, an approximate input of the one or more approximate inputs based on the mapping of the input queries to the one or more approximate inputs. Further, the controller may be configured to determine whether the approximate input is stored in the cache. Furthermore, in case the approximate input is not stored in the cache, the controller may be configured to request the computation unit to compute, for the input query, an output of the one or more outputs, and store, as a cache entry in the cache, the approximate input in association with the respective output and the respective state information, wherein the respective output is the computed output.

That is, the controller may be configured to store, as a cache entry in the cache, the approximate input in association with the computed output as the respective output and the respective state information. Storing the respective state information as part of the cache entry has the advantage described already above.

In an implementation form of the first aspect, in case the approximate input is not stored in the cache, the controller is configured to provide the computed output to the query unit.

In an implementation form of the first aspect, in case the approximate input is stored as a cache entry in the cache, the controller is configured to, depending on the respective state information of the cache entry, provide the respective output of the cache entry to the query unit, or request the computation unit to compute, for the input query, an output of the one or more outputs and compare the computed output with the respective output of the cache entry.

In case the approximate input is stored as a cache entry in the cache, the controller may be configured to request the computation unit to compute, for the input query, an output of the one or more outputs and compare the computed output with the respective output of the cache entry in case the respective state information of the cache entry suggests respectively indicates an error or a situation favoring an error in the mapping of the approximate input of the cache entry to the respective output of the cache entry for the input query. Otherwise, the controller may be configured to provide the respective output of the cache entry to the query unit (i.e. in case the respective state information of the cache entry does not indicate such an error or situation favoring such an error for the input query). The comparison of the computed output with the respective output of the cache entry allows to verify whether the mapping of the approximate input of the cache entry to the respective output of the cache entry is correct for the input query or not. That is, that comparison allows to verify the validity of the mapping of the approximate input of the cache entry to the respective output of the cache entry for the input query.

In case the approximate input is stored as a cache entry in the cache, the controller may be configured to, dependent on the respective state information of the cache entry and the input query, provide the respective output of the cache entry to the query unit, or request the computation unit to compute, for the input query, an output of the one or more outputs and compare the computed output with the respective output of the cache entry.

In an implementation form of the first aspect, the controller is configured to provide the respective output of the cache entry to the query unit, in case the respective output of the cache entry equals to the computed output. The controller may be configured to overwrite the respective output of the cache entry with the computed output and provide the computed output to the query unit, in case the respective output of the cache entry does not equal to the computed output. Alternatively, the controller may be configured to delete the cache entry, in case the respective output of the cache entry does not equal to the computed output.

Thus, in case the respective output of the cache entry does not equal to the computed output, the controller may be configured to overwrite the respective output of the cache entry with the computed output or delete the cache entry. This is advantageous, because in case there is an error in the mapping between the approximate input of the cache entry and the respective output of the cache entry, the controller may eliminate said error by the above-described two options. Either the controller may overwrite the respective output with the computed output (i.e. the output computed by the computation unit for the input query) or delete the cache entry.

In an implementation form of the first aspect, the respective state information of the cache entry comprises a query counter and a query threshold. The controller may be configured to set the query counter to an initial counter value and the query threshold to an initial threshold, when storing, as the cache entry in the cache, the approximate input in association with the respective output and the respective state information.

The initial counter value may be zero. The initial threshold may be one. The query counter of the respective state information of the cache entry may indicate or correspond to the number of input queries, which are mapped to the approximate input of the cache entry, since the computation, by the computation unit, of the respective output of the cache entry. The query threshold may indicate the number of input queries mapped to the approximate input of the cache entry that may be received by the controller until a verification of the validity of the mapping of the approximate input of the cache entry to the respective output of the cache entry is to be performed. The lower the value of the query threshold of the cache entry, the more often the verification of the validity of the mapping of the approximate input of the cache entry to the respective output of the cache entry is to be performed. This improves an error detection and error elimination in the mapping of the approximate input of the cache entry to the respective output of the cache entry. The higher the value of the query threshold of the cache entry, the less often the aforementioned verification is to be performed. This reduces the time of the controller spend with regard to such verification.

In an implementation form of the first aspect, the controller is configured to provide the respective output of the cache entry to the query unit and increment the query counter by one, in case the query counter does not equal to the query threshold.

In an implementation form of the first aspect, the controller is configured to request the computation unit to compute, for the input query, the output, compare the computed output with the respective output of the cache entry, set the query counter to the initial counter value and update the query threshold, in case the query counter equals to the query threshold.

In particular, in case the query counter of the respective state information equals to the query threshold of the respective state information of the cache entry, the respective state information indicates a situation favoring an error in the mapping of the approximate input of the cache entry to the respective output of the cache entry for the input query. Thus, it is an advantage that the controller may compare the computed output (computed by the computation unit for the input query) with the respective output of the cache entry, in case the query counter equals to the query threshold. Namely the comparison allows verifying whether the mapping of the approximate input of the cache entry to the respective output of the cache entry is correct or not for the input query. That is, whether the approximate input of the cache entry is mapped to the correct output (namely the computed output) for the input query or not.

In an implementation form of the first aspect, the controller is configured to update the query threshold by incrementing the query threshold and provide the respective output of the cache entry to the query unit, in case the respective output of the cache entry equals to the computed output. The controller may be configured to update the query threshold by setting the query threshold to the initial threshold, overwrite the respective output of the cache entry with the computed output and provide the computed output to the query unit, in case the respective output of the cache entry does not equal to the computed output.

Incrementing the query threshold allows increasing the time until a verification of the mapping between the approximate input of the cache entry and the respective output of the cache entry is performed again, in case the verification of the mapping (by comparing the respective output of the cache entry with the computed output) shows that the mapping is valid, because the respective output of the cache entry equals to the computed output.

In particular, the controller is configured to update the query threshold by incrementing the query threshold according to a backoff function (e.g. a multiplicative increase), in case the respective output of the cache entry equals to the computed output.

In an implementation form of the first aspect, the respective state information of the cache entry comprises a status flag and at least two slots each for storing an input query. The status flag is variable between a valid state indicating that all of the slots are occupied and a processing state indicating that at least one of the slots is empty. The controller may be configured to store the input query in an empty slot of the slots and set the flag to the processing state, when storing, as the cache entry in the cache, the approximate input in association with the respective output and the respective state information.

The state information of the cache entry may comprise the status flag and the at least two slots in addition or alternatively to the query counter and query threshold. The processing state may be referred to as staging state.

In an implementation form of the first aspect, the controller is configured to provide the respective output of the cache entry to the query unit, in case the status flag equals to the valid state or one of the slots stores the input query.

In an implementation form of the first aspect, the controller is configured to request the computation unit to compute, for the input query, the output, compare the computed output with the respective output of the cache entry, and store the input query in an empty slot of the slots, in case the status flag does not equal to the valid state and no one of the slots stores the input query.

In particular, in case the status flag does not equal to the valid state and no one of the slots stores the input query, the respective state information indicates a situation favoring an error in the mapping of the approximate input of the cache entry to the respective output of the cache entry for the input query. Namely, in case at least one of the slots stores the input query, this is an indication that the controller has already at least once requested the computation unit to compute for the input query an output and stored the computed output as the respective output of the cache entry. However, in case none of the slots stores the input query, the computation unit has not yet requested the computation unit to compute an output for the input query. Thus, for the input query, the mapping of the approximate input (to which the input query is mapped) of the cache entry to the respective output of the cache entry may not be correct respectively erroneous.

In an implementation form of the first aspect, the controller is configured to set the status flag to the valid state and provide the respective output of the cache entry to the query unit, in case the respective output of the cache entry equals to the computed output and all of the slots are occupied. The controller may be configured to delete the cache entry, in case the respective output of the cache entry does not equal to the computed output.

In order to achieve the controller according to the first aspect of the present disclosure, some or all of the implementation forms and optional features of the first aspect, as described above, may be combined with each other.

A second aspect of the present disclosure provides a system comprising the controller according to the first aspect or any of its implementation forms, as described above, wherein the controller is configured to control the cache.

The system of the second aspect achieve the same advantages as the controller of the first aspect and its implementation forms and optional features.

The implementation forms and optional features of the controller according to the first aspect are correspondingly valid for the system according to the second aspect. The above description with regard to a cache controllable by the controller of the first aspect or any of its implementation forms is correspondingly valid for the cache of the system according to the second aspect.

A third aspect of the present disclosure provides a method for controlling a cache. The method comprises the step of mapping input queries to one or more approximate inputs. For each of the one or more approximate inputs, the method comprises the step of storing, in the cache, the approximate input in association with a respective output of a computation unit and a respective state information as a cache entry. The respective state information comprises information for monitoring validity of a mapping of the approximate input to the respective output of the cache entry. Two or more input queries comprising at least one common characteristic are mapped to the same approximate input. In other words, the method comprises: mapping input queries to one or more approximate inputs; and for each of the one or more approximate inputs, the method comprises: storing, in the cache, the approximate input in association with a respective output of a computation unit and a respective state information as a cache entry.

In an implementation form of the third aspect, the method comprises the step of monitoring the validity of the mapping of the approximate input to the respective output of the cache entry based on the respective state information of the cache entry. That is the method may comprise: monitoring the validity of the mapping of the approximate input to the respective output of the cache entry based on the respective state information of the cache entry.

In an implementation form of the third aspect, in response to receiving an input query mapped to the approximate input of the cache entry, the method comprises: dependent on the respective state information of the cache entry, requesting the computation unit to compute, for the input query, an output of the one or more outputs.

In an implementation form of the third aspect, in response to receiving an input query of the input queries, the method comprises: storing, in the cache, the received input query in association with an approximate input of the one or more approximate inputs, wherein the received input query is mapped to the approximate input.

In an implementation form of the third aspect, the method comprises: receiving an input query of the input queries from a query unit; and determining, for the input query, an approximate input of the one or more approximate inputs based on the mapping of the input queries to the one or more approximate inputs. Further, the method may comprise: determining whether the approximate input is stored in the cache. Furthermore, in case the approximate input is not stored in the cache, the method may comprise: requesting the computation unit to compute, for the input query, an output of the one or more outputs; and storing, as a cache entry in the cache, the approximate input in association with the respective output and the respective state information. The respective output is the computed output.

In an implementation form of the third aspect, in case the approximate input is not stored in the cache, the method comprises: providing the computed output to the query unit.

In an implementation form of the third aspect, in case the approximate input is stored as a cache entry in the cache, the method comprises: depending on the respective state information of the cache entry, providing the respective output of the cache entry to the query unit, or requesting the computation unit to compute, for the input query, an output of the one or more outputs and compare the computed output with the respective output of the cache entry.

In an implementation form of the third aspect, the method comprises: providing the respective output of the cache entry to the query unit, in case the respective output of the cache entry equals to the computed output. The method may comprise: overwriting the respective output of the cache entry with the computed output and providing the computed output to the query unit, in case the respective output of the cache entry does not equal to the computed output. Alternatively, the method may comprise: deleting the cache entry, in case the respective output of the cache entry does not equal to the computed output.

In an implementation form of the third aspect, the respective state information of the cache entry comprises a query counter and a query threshold. The method may comprise: setting the query counter to an initial counter value and the query threshold to an initial threshold, when storing, as the cache entry in the cache, the approximate input in association with the respective output and the respective state information.

In an implementation form of the third aspect, the method comprises: providing the respective output of the cache entry to the query unit and incrementing the query counter by one, in case the query counter does not equal to the query threshold.

In an implementation form of the third aspect, the method comprises: requesting the computation unit to compute, for the input query, the output, comparing the computed output with the respective output of the cache entry, setting the query counter to the initial counter value and updating the query threshold, in case the query counter equals to the query threshold.

In an implementation form of the third aspect, the method comprises: updating the query threshold by incrementing the query threshold and providing the respective output of the cache entry to the query unit, in case the respective output of the cache entry equals to the computed output. The method may comprise: updating the query threshold by setting the query threshold to the initial threshold, overwriting the respective output of the cache entry with the computed output and providing the computed output to the query unit, in case the respective output of the cache entry does not equal to the computed output.

In an implementation form of the third aspect, the respective state information of the cache entry comprises a status flag and at least two slots each for storing an input query. The status flag is variable between a valid state indicating that all of the slots are occupied and a processing state indicating that at least one of the slots is empty. The method may comprise: storing the input query in an empty slot of the slots and setting the flag to the processing state, when storing, as the cache entry in the cache, the approximate input in association with the respective output and the respective state information.

In an implementation form of the third aspect, the method comprises: providing the respective output of the cache entry to the query unit, in case the status flag equals to the valid state or one of the slots stores the input query.

In an implementation form of the third aspect, the method comprises: requesting the computation unit to compute, for the input query, the output, comparing the computed output with the respective output of the cache entry, and storing the input query in an empty slot of the slots, in case the status flag does not equal to the valid state and no one of the slots stores the input query.

In an implementation form of the third aspect, the method comprises: setting the status flag to the valid state and providing the respective output of the cache entry to the query unit, in case the respective output of the cache entry equals to the computed output and all of the slots are occupied. The method may comprise: deleting the cache entry, in case the respective output of the cache entry does not equal to the computed output.

The method of the third aspect and its implementation forms and optional features achieve the same advantages as the controller of the first aspect and its respective implementation forms and respective optional features.

The implementation forms and optional features of the controller according to the first aspect are correspondingly valid for the method according to the third aspect.

In order to achieve the method according to the third aspect of the present disclosure, some or all of the implementation forms and optional features of the third aspect, as described above, may be combined with each other.

A fourth aspect of the present disclosure provides a computer program comprising program code for performing when implemented on a processor, a method according to the third aspect or any of its implementation forms.

A fifth aspect of the present disclosure provides a computer program comprising a program code for performing the method according to the third aspect or any of its implementation forms.

A sixth aspect of the present disclosure provides a computer comprising a memory and a processor, which are configured to store and execute program code to perform the method according to the third aspect or any of its implementation forms.

A seventh aspect of the present disclosure provides a non-transitory storage medium storing executable program code which, when executed by a processor, causes the method according to the third aspect or any of its implementation forms to be performed.

It has to be noted that all devices, elements, units and means described in the present application could be implemented in software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms will be explained in the following description of specific embodiments in relation to the enclosed drawings, in which
- Figures 1 (a) and (b): show an example of a mapping of two different cache types.
- Figure 2: shows an example of a controller according to an embodiment of the invention.
- Figures 3 (a) and (b): show an example of two different cache entries according to embodiments of the invention.
- Figure 4: shows an example of a method according to an embodiment of the invention for controlling a cache.
- Figure 5: shows for the method of Figure 4 six examples of an input query, a respective approximate input and a cache entry of the cache for the respective approximate input as well as results of resulting method steps performed by the method.
- Figure 6: shows an example of a method according to a further embodiment of the invention for controlling a cache.
- Figure 7: shows for the method of Figure 6 five examples of an input query, a respective approximate input and a cache entry of the cache for the respective approximate input as well as results of resulting method steps performed by the method.

In the Figures, same elements are labelled with the same reference sign.

### DETAILED DESCRIPTION OF EMBODIMENTS

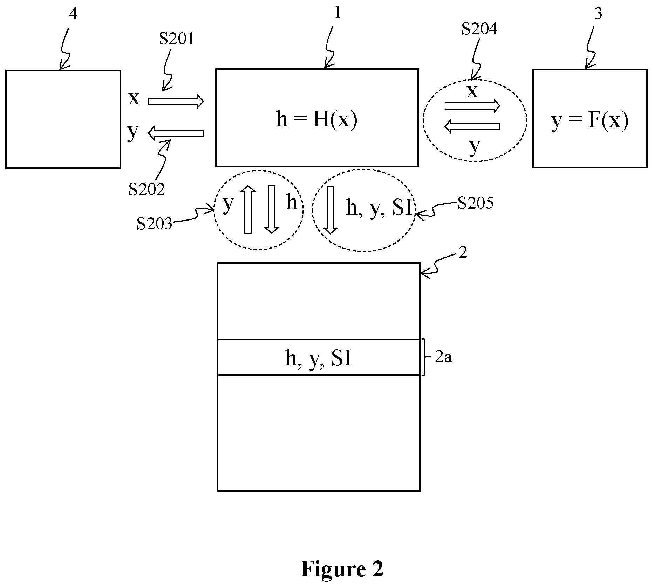

Figure 2 shows an example of a controller according to an embodiment of the invention.

The above description of the controller according to the first aspect is correspondingly valid for the controller of Figure 2.

Figure 2 shows a controller 1 for a cache 2, wherein the cache 2 is configured to store one or more outputs of a computation unit 3. As shown in Figure 2, the controller 1 may receive (S201) an input query x from a query unit 4. The controller 1 may provide (S202) to the query unit 4 an output y in response to the input query x, wherein the output y corresponds to one of the one or more outputs of the computation unit 3.

The controller 1 may be configured to map input queries provided by the input query 4 to one or more approximate inputs using an approximate function H(x), wherein each input query is mapped to only one respective approximate input. The approximate function H(x) may comprise or correspond to at least one mathematical operation, such as rounding to a (certain) digit.

Thus, when receiving (S201) the input query x from the query unit 4, the controller 1 may map the received input query x to the respective approximate input h using the approximate function H(x) (h = H(x)). That is, the controller may be configured to determine, for the received input query x, the respective approximate input h. The controller 1 may be configured determine whether the respective approximate input h is stored in the cache 2. In other words, the controller 1 may determine whether the cache 2 comprises a cache entry 2a for the respective approximate input h. In case the respective approximate input h (in the following referred to by only approximate input) is not stored in the cache 2, the controller 1 may request (S204) the computation unit 3 to compute, for the input query x, an output y. The computation unit 3 provides (S204) the computed output y to the controller 1. The computation unit 3 may be an analytics service. The computation unit 3 may apply a function F(x), e.g. an analytics function, on the input query x received (S204) from the controller 1 and return (S204) the computed output y (computed for the input query x) to the controller 1.

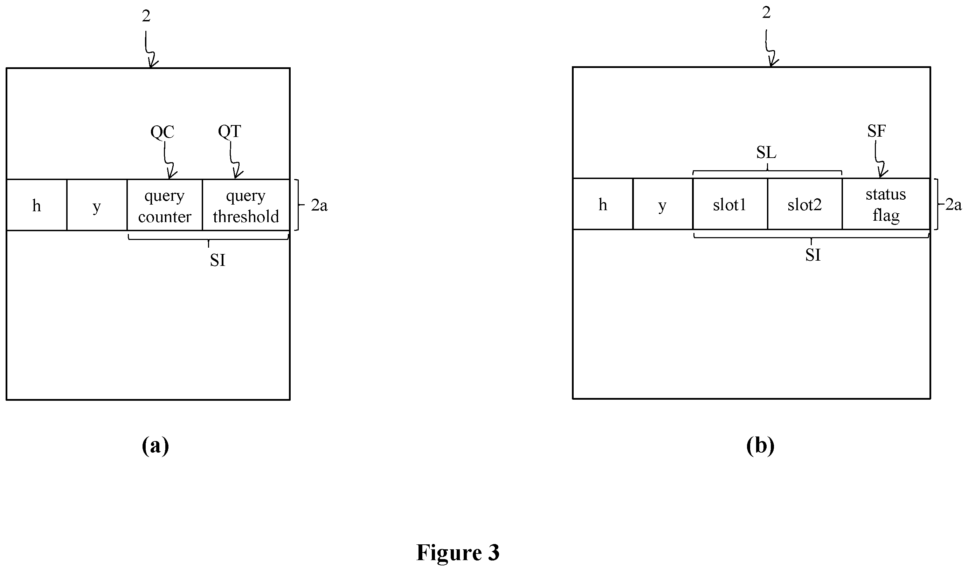

The controller may store (S205), as a cache entry 2a in the cache 2, the approximate input h in association with a respective output y, which corresponds to the computed output y, and a respective state information SI. The respective state information SI of the cache entry 2a comprises information for monitoring validity of a mapping of the approximate input h to the respective output y of the cache entry 2a. Two embodiments for the respective state information SI are shown in Figures 3 (a) and (b). The controller may provide (S202) the computed output y as the respective output y to the query unit 4. The cache 2 may store one or more cache entries, wherein each cache entry comprises an approximate input in association with a respective output and a respective state information SI. The cache 2 may comprise for each approximate input only one cache entry. That is, the one or more cache entries of the cache 2 may not comprise the same approximate input (i.e. they comprise different approximate inputs). Therefore, the controller 1 may be configured to store data, in particular one or more approximate inputs (each in association with the respective output and respective state information), in the cache 2 such that each approximate input is stored as only one cache entry in the cache 2. The number of cache entries that are storable in the cache 2 depends on the storage space respectively memory space of the cache 2. The larger that space the more cache entries may be stored and vice versa.

In case the approximate input h (that is determined by the controller 1 for the received input query x) is stored as a cache entry 2a in the cache 2, the controller 1 may retrieve respectively read (S203) the respective output y from the cache 2, in particular from the cache entry 2a of the cache 2, and provide (S202) the respective output y to the query unit 4.

Thus, as described above the controller 1 may be configured to store data to the cache 2 and retrieve data (stored in the cache 2) from the cache 2. The terms "store", "save" and "write" may be used as synonyms. The terms "retrieve" and "read" may be used as synonyms.

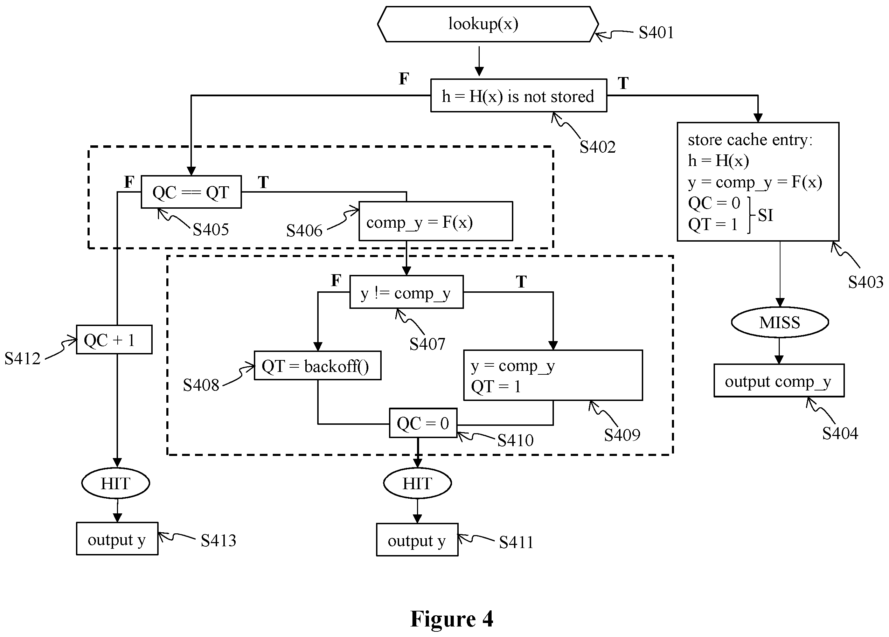

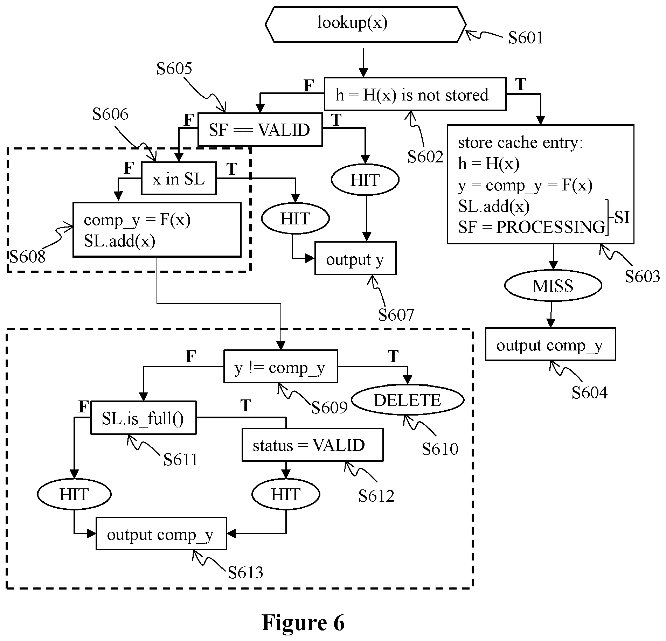

In case the approximate input h, to which the input query x received by the controller 1 is mapped to, is stored as a cache entry 2a in the cache 2, the controller 1 may request the computation unit 3 to compute an output for the input query x, depending on the respective state information SI of the cache entry 2a associated with the approximate input h of the cache entry 2a. This may be done for updating respectively refreshing the respective output y of the cache entry 2a, in case the controller 1 determines that the mapping of the approximate input h of the cache entry 2a to the respective output y of the cache entry 2a is not valid (i.e. erroneous) for the received input query x. Further details, with regard to the function and interaction of the controller 1, cache 2 and computation unit 3 are described with regard to Figures 4 to 7. In particular, Figures 4 and 6 each show an example of a method according to an embodiment of the invention that may be performed by the controller 1 for controlling the cache 2. The controller 1 may be configured to perform the method of Figure 4 and the method of Figure 6 for controlling the cache 2.

The query unit 4, controller 1, cache 2 and computation unit 3 may be on the same machine (hence communicating via system calls, inter process communication, etc.) or placed across a network (hence communicating via remote procedure calls, specific network protocols, etc.).

As indicated in Figure 2, the controller 1 may comprise a front-end side interface with the query unit 4. The controller 1 may search the cache 2, in particular the catalog of the cache, using the approximate function H(x) to determine whether the approximate input h, to which the input query x received from the query unit 4 is mapped to, is stored as a cache entry 2a in the cache 2. In case, a cache entry 2a is found for the approximate input h, the controller 1 may be configured to consult the state information SI. The controller 1 may be configured to return the output y of the cache entry 2a (cache hit), in case the state information of the cache entry 2a suggests that the mapping of the approximate input h of the cache entry 2a to the output y of the cache entry y is valid respectively correct for the input query x.

The controller 1 may comprise a backend side interface with the computation unit 3.

The controller 1 may be configured to schedule the work for the computation unit 3, by sending request for computations to the computation unit 3. In particular, the controller 1 may comprise a scheduler. In case, the computation unit 3 is a service, such as an analytics service, the controller 1 may comprise a service scheduler, such as an analytics scheduler. The controller 1 may be configured to act on a cache entry of the cache 2, in particular update or delete a cache entry, when the controller identifies an error of the mapping of the approximate input of the cache entry to the output of the cache entry for an input query.

The controller 1 may use the state information SI of each cache entry of the cache 2 for monitoring the validity of the mapping of the respective approximate input of the cache entry to the respective output of the cache entry. In particular, the controller 1 may use the state information SI of each cache entry of the cache 2 for scheduling the work of the computation unit 3, in particular computation requests send by the controller 1 to the computation unit 3 triggering a computation of the computation unit 3.

The approximation function H(x), which may be used by the controller 1, specifies how to transform input queries into the approximate inputs.

In particular, a cache entry 2a of the cache 2 corresponds to a key-value pair of the catalog of the cache 2. Thus, the approximation function H(x) may define for an input query x the respective key of the key-value pair, namely the respective approximate input h. The value of the key-value pair is a composition of two elements, namely the respective output y and the respective state information SI. The respective state information SI allows tracking the quality of the mapping between the approximate input h of the cache entry 2a and the respective output y of the cache entry 2a.

In particular, when receiving (S201) an input query x, the controller 1 may apply the approximation function H(x) on the input query x to find the approximate input h for the received input query x, identify the related cache entry 2a for the approximate input h (it is assumed that the approximate input h is stored as part of a cache entry 2a in the cache 2) and check the state information SI of the cache entry 2a. The controller 1 may return respectively provide the stored output y of the cache entry, in case the state information SI of the cache entry indicates that the approximate mapping is valid. That is, in case the mapping of the approximate input h of the cache entry 2a to the stored output y of the cache entry is valid. The controller 1 may then update the state information SI. The state information SI may trigger the controller 1 to schedule respectively request a computation by the computation unit 3 based on the received input query x. The controller 1 may use the computed output y for verifying the validity of the mapping between the approximate input and the stored output of the cache entry for the received input query.

The controller 1 may compare the computed output and the stored output of the cache entry (i.e. the current value of the output y hosted in the cache entry). If an error is detected (i.e. the computed output and the stored output do not equal to each other), the controller may act on the cache entry. According to one alternative, the controller 1 may overwrite the stored output y with the computed output. According to a further alternative the controller 1 may delete the cache entry 2a.

For further details on the controller 1, the cache 2, the computation unit 3 and the query unit 4 reference is made to the above description of the controller according to the first aspect as well as the following description of Figures 3 to 7.

Figures 3 (a) and (b) show an example of two different cache entries according to embodiments of the invention. In particular, Figures 3 (a) and (b) shows two embodiments for the respective state information SI of a cache entry 2a of the cache 2 of Figure 2. For describing these two embodiments reference is made to the above description of Figure 2.

Figure 3 (a) shows an embodiment according to which the state information SI comprises a query counter QC and a query threshold QT. Thus, a cache entry 2a comprises an approximate input h in association with a respective output y as well as the query counter QC and the query threshold QT as a respective state information SI. An example of a control method that may be performed by a controller, such as the controller 1 of Figure 2, to control the cache 2 (e.g. the cache of Figure 2), in case the state information SI comprises a query counter QC and a query threshold QT, is shown in Figure 4. The above is true for any cache entry of the cache 2. That is, each cache entry of the cache 2 may comprise a respective approximate input h in association with a respective output y as well as the query counter QC and the query threshold QT as a respective state information SI. For more details on the query counter QC and the query threshold QT reference is made to the corresponding description of the controller according to the first aspect.

Figure 3 (b) shows an embodiment according to which the state information SI comprises a status flag SF and two slots SL, in particular slot1 and slot2, each for storing an input query. The number of slots SL is not limited to two slots but may be greater than two. That is, the state information SI may comprise the status flag FL and at least two slots SL. The status flag SF is variable between a valid state indicating that all of the slots SL are occupied and a processing state indicating that at least one of the slots SL is empty. A slot that is occupied (i.e. occupied slot) stores already an input query. A slot that is empty (i.e. empty slot) may be used by the controller 1 for storing an input query in the empty slot. An example of a control method that may be performed by a controller, such as the controller 1 of Figure 2, to control the cache 2 (e.g. the cache of Figure 2), in case the state information SI comprises a status flag SF and at least two slots SL, is shown in Figure 6. The above is true for any cache entry of the cache 2. That is, each cache entry of the cache may comprise a respective approximate input h in association with a respective output y as well as the status flag SF and the at least two slots SL as a respective state information SI. For more details on the status flag SF and the at least two slots SL reference is made to the corresponding description of the controller according to the first aspect.

The embodiments of Figures 3 (a) and (b) may optionally be combined with each other. That is, the status information SI may comprise the query counter QC, the query threshold QT, the status flag SF and the at least two slots SL.

Figure 4 shows an example of a method according to an embodiment of the invention for controlling a cache. In the following description of Figure 4 reference is made to the description of Figures 2 and 3 (a). That is, it is assumed that the controller 1 of Figure 2 controls the cache 2 of Figure 2 using the method of Figure 4, wherein the state information SI of any cache entry comprises a query counter QC and a query threshold QT. This is only by way of example for describing the method of Figure 4 and, thus, does not limit the present disclosure. Further, it is assumed that an initial counter value for the query counter QC is equal to zero (QC = 0) and an initial threshold for the query threshold QT is equal to one (QT = 1). This is only by way of example for describing the method of Figure 4 and, thus, does not limit the present disclosure. In Figure 4, the term "false" is abbreviated by the letter "F" and the term "true" is abbreviated by the letter "T". This is also valid for Figure 6.

As indicated in Figure 4, the method is performable by the controller 1 for controlling the cache 2 with respect to an input query x ("lookup(x)"). At first, in a step S401, the controller 1 receives the input query x from the query unit 4 and determines for the received input query x an approximate input h. As outlined already above, this may be done by using an approximate function H(x) that is applied to the received input query x to generate the approximate input h (i.e. h = H(x)). In a next step S402, the controller 1 determines whether the approximate input h is already stored in the cache 2 or not. In case the approximate input h is not stored in the cache 2 ("h=H(x) is not stored" is "true"), i.e. there is no cache entry for the approximate input h, the method proceeds to step S403. Otherwise ("h=H(x) is not stored" is "false"), i.e. the approximate input h is stored in association with a respective output y and a respective status information SI as a cache entry 2 in the cache 2, the method proceeds to step S405. In step S403, the controller 1 requests the computation unit 3 to compute, for the input query x, an output comp_y and stores, as a cache entry 2a in the cache 2, the approximate input h in association with the respective output y and the respective state information SI. The respective output y is the computed output comp_y (y = comp_y) and the respective state information SI comprises a query counter QC and a query threshold QT. In step S403, the controller 1 sets the query counter QC to an initial counter value, which may be zero (QC = 0), and the query threshold QT to an initial threshold, which may be one (QT = 1). As indicated in Figure 4 by the term "MISS", the step S402 resulting in the step S403 corresponds to a cache miss. Therefore, in the step S404 following the step S403, the controller 1 provides the computed output comp_y to the query unit 4 in response to the input query x received (in step S401) from the query unit 4. That is, in step S404, the controller 1 returns, for the received input query x, the computed output comp_y. This providing/return may be performed at the same time or before the storing of the cache entry.

In step S405, the controller 1 determines whether the query counter QC of the respective status information SI of the cache entry is equal to the query threshold QT of the respective status information SI of the cache entry. In case the query counter QC does not equal to the query threshold QT ("QC == QT" is "false"), the method proceeds to step S412. In case the query counter QC equals to the query threshold QT ("QC == QT" is "true"), the method proceeds to the step S406. In step S412, the controller 1 increments the query counter by one ("QC+1"). Next, in step S413 the controller 1 provides the respective output y of the cache entry to the query unit 4. This corresponds to a cache hit as indicated by the term "HIT" in Figure 4. The steps S412 and S413 may be performed at the same time or in reversed order.

In step S406, the controller 1 requests the computation unit 3 to compute, for the received input query x, the output comp_y ("comp_y = F(x)"). Next, in step S407 following step S406, the controller 1 compares the computed output comp_y with the respective output y of the cache entry, in step S408 or S409 the controller 1 updates the query threshold QT and in step S410 the controller 1 sets the query counter QC to the initial counter value ("QC = 0"). In step S409, the controller 1 overwrites the respective output y of the cache entry with the computed output comp_y. The step S410 may be performed at the same time as the step S407, S408 or S409, before the step S407 or before the step S408 or S409. In case the computed output comp_y equals to the respective output y of the cache entry ("y!= comp_y" is "false"), the method proceeds to step S408, in which the controller 1 updates the query threshold QT by incrementing the query threshold QT ("QT = backoff()), while the respective output y of the cache entry remains unchanged. As indicated in Figure 4, the controller 1 may increment the query threshold according to a backoff function (e.g. a multiplicative increase). For example, the backoff function may correspond to two to the power of the query counter QC before setting the query counter in step S410 to the initial counter value (QT = 2^{QC}) In case the computed output comp_y does not equal to the respective output y of the cache entry ("y!= comp_y" is "true"), the method proceeds to step S409, in which the controller updates the query threshold QT by setting the query threshold QT to the initial threshold ("QT = 1"). That is, in step S409 the controller resets the query threshold QT. In addition, in step S409, the controller 1 overwrites the respective output y of the cache entry with the computed output comp_y ("y = comp_y"). In step S411, the controller 1 provides the respective output y of the cache entry to the query unit 4, in case the respective output y of the cache entry equals to the computed output comp_y. In case the respective output y of the cache entry does not equal to the computed output comp_y, the controller 1 provides, in step S411, the computed output comp_y to the query unit 4. This corresponds to a cache hit as indicated by the term "HIT" in Figure 4. The step S411 may be performed at the same time as the step S408, S409 or S410, before the step S410 or before the step S408 or S409.

The method of Figure 4 may be referred to as "autorefresh design". This design assumes that the mappings between the respective approximate input and the respective output of each of the discovered cache entries of the cache are in most cases trustworthy, i.e. correct/valid. Therefore, the respective output of any cache entry of the cache is updated respectively refreshed based on some periodicity. That is, in case the computing unit 3 is an analytics service, the method of Figure 4 re-runs the analytics (hence the term refresh) based on some periodicity.

With regard thereto, for any cache entry of the cache, the query counter QC of the respective state information SI may define the number of input queries (that are mapped to the respective approximate input of the cache entry) received by the controller since the last refresh. That is, since the last time the controller has performed the step S403 or steps S406 and S407. The two steps S406 and S407 allow to verify whether, for a received input query (mapped to the approximate input of a cache entry), the mapping of the approximate input of the cache entry to the respective output of the cache entry is correct. This may be achieved by comparing the computed output, which is computed by the computation unit 3 for the received input query, with the respective output of the cache entry comprising the approximate input to which the received input query is mapped to.

For any cache entry of the cache, the query threshold QT of the respective state information SI may define the number of input queries (that are mapped to the respective approximate input of the cache entry) received by the controller after which a refresh is required. That is after which the steps S406 and S407 are to be performed. Therefore, for any cache entry of the cache, in case in step S405 the controller 1 determines that the respective query counter QC of the cache entry corresponds to the respective query threshold QT of the cache entry ("QC == QT" is "true"), the controller performs the steps S406 and S407. In this case, the respective state information SI (comprising the respective query counter QC and respective query threshold QT) indicates a situation favoring an error in the mapping of the respective approximate input of the cache entry to the respective output of the cache entry for the received input query

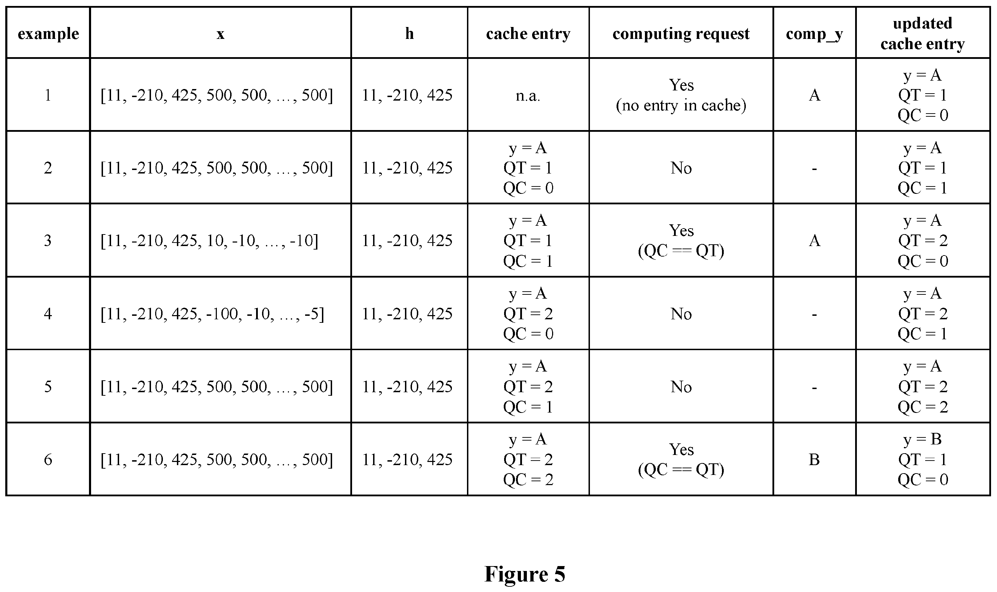

Figure 5 shows for the method of Figure 4 six examples of an input query, a respective approximate input and a cache entry of the cache for the respective approximate input as well as results of resulting method steps performed by the method.

The column "example" of the table of Figure 5 indicates the example number 1 to 6. The column "x" indicates an input query x received by the controller 1 in step S401 of the method of Figure 4. The column "h" indicates the approximate input h, which is determined by the controller 1 for the received input query x in step S401 of the method of Figure 4. The column "cache entry" indicates the values of the cache entry for the determined approximate input h, i.e. the values stored in association with the determined approximate input h as the cache entry. The abbreviation "n.a." indicates that there is no cache entry for the approximate input h. The column "computing request" indicates whether the controller request in step S403 or S406 the computation unit to compute, for the received input query x, an output comp_y. The column "comp_y" indicates the computed output comp_y for the examples in which the controller sends a computation request to the computation unit 3 (i.e. the controller performs the step S403 or S406 of the method of Figure 4). The column "updated cache entry" indicates the values of the cache entry for the determined approximate input h, i.e. the values stored in association with the determined approximate input h as the cache entry, after the controller has performed the method of Figure 4 for the received input query x.

According to the example 1, the controller receives as the input query x the set (vector or array) [11, -210, 425, 500, 500, ..., 500]. It is assumed that the controller maps each input query comprising as the first three elements the elements [11, -210, 425] to the same approximate input h corresponding to [11, -210, 425]. In particular, the controller 1 may apply an approximate function H(x) to the received input query x = [11, -210, 425, 500, 500, ..., 500] to determine the respective approximate input h = [11, -210, 425]. The approximate function H(x) may be a prefix operation extracting the first three elements of the input query set. Further, for the example 1, it is assumed that the determined approximate input h is not stored in the cache 2. That is, there is no cache entry for the approximate input h (n.a.). Since in the example 1, the cache is empty (n.a.) the input query x = [11,-210, 425, 500, 500, ..., 500] results in a cache miss and, thus, the controller performs the steps S401 to S404. Thus, the controller invokes respectively requests the computation unit 3 to compute, for the received input query x, an output. As shown in Figure 5, for the example 1, the computed output y is assumed to equal to A for the input query x = [11, -210, 425, 500, 500, ..., 500]. As a result, in the example 1 for the approximate input h = [11, - 210, 425], the approximate input h is then stored in association with A as the respective output y, the query counter QC equaling to the initial counter value (QC = 0) and the query threshold QT equaling to the initial threshold (QT = 1). That is, the key of said cache entry corresponds to the approximate input h = [11, -210, 425] and the associated values correspond to the computed output A and the initialized respective state information SI comprising the query counter QC and the query threshold QT.

The table of Figure 5 shows an evolution of the cache with several examples considering the following cases:
The controller 1 requests the computation unit to compute an output, because the approximate input h for the received input query x is not stored in the cache (cf. example 1 of Figure 5) or the query counter QC equals to the query threshold QT (cf. examples 3 and 6 of Figure 5). Thus, the method according to example 1 of Figure 5 comprises steps S402 and step S403 of Figure 4, wherein a "true" is yielded in step S402.

The controller 1 determines that a refresh of the cache entry, in particular monitoring of the validity between the approximate input h of the cache entry and the respective output of the cache entry, is not needed because the query threshold QT is greater than the query counter QC (QT > QC). Thus, the controller does not request a computing of the computation unit (cf. examples 2, 4 and 5 of Figure 5). The method according to examples 2, 4 and 5 of Figure 5 each comprise the steps S402 and S405 of Figure 4, wherein a "false" is yielded in each of steps S402 and S405.

For the example 3 of Figure 5, it is assumed that in step S408 the controller increments the query threshold QT according to a backoff function that corresponds to two to the power of the query counter QC before the query counter QC is reset to the initial counter value in step S410 (QT = 2^{QC}). That is, a refresh respectively update is triggered ever 1, 2, 4, 8, 16, 32, etc. input queries mapped to the approximate input h = [11, -210, 425] that are received by the controller 1. The method according to example 3 of Figure 5 comprises steps S402, S405, S406, S407, S408 and S410 of Figure 4, wherein a "false" is yielded in step S402, a "true" is yielded in step S405 and a "false" is yielded in step S407.

In case of the example 6 of Figure 5, the controller overwrites the respective output value of the cache entry, because it is assumed that, in the example 6, the computation unit provides for the received input query x = [11, -210, 425, 500, 500, ..., 500] an output equaling to B (comp_y = B). As shown in the example 6, the respective output y of the cache entry associated to the approximate value h = [11, -210, 425] corresponds to A (y = A). In contrast thereto, according to example 6, the output comp_y computed by the computation unit for the input query x = [11, -210, 425, 500, 500, ..., 500], which is mapped to the approximate input h = [11, -210, 425], is equal to B (comp_y = B). Therefore, in the example 6 the computed output comp_y (computed by the computation unit for the received input query x = [11, -210, 425, 500, 500, ..., 500]) is not equal to the respective output of the cache entry (stored in the cache entry for the approximate input h = [11, -210, 425]). The method according to example 6 of Figure 5 comprises steps S402, S405, S406, S407, S409 and S410 of Figure 4, wherein a "false" is yielded in step S402, a "true" is yielded in step S405 and a "true" is yielded in step S407.

Figure 6 shows an example of a method according to a further embodiment of the invention for controlling a cache. In the following description of Figure 6 reference is made to the description of Figures 2 and 3 (b). That is, it is assumed that the controller 1 of Figure 2 controls the cache 2 of Figure 2 using the method of Figure 6, wherein the state information SI of any cache entry comprises a status flag SF and at least two slots SL each for storing an input query. This is only by way of example for describing the method of Figure 6 and, thus, does not limit the present disclosure.

As indicated in Figure 6, the method is performable by the controller 1 for controlling the cache 2 with respect to an input query x ("lookup(x)"). At first, in a step S601, the controller 1 receives the input query x from the query unit 4 and determines for the received input query x an approximate input h. As outlined already above, this may be done by using an approximate function H(x) that is applied to the received input query x to generate the approximate input h (i.e. h = H(x)). In a next step S602, the controller 1 determines whether the approximate input h is already stored in the cache or not. In case the approximate input h is not stored in the cache 2 ("h=H(x) is not stored" is "true"), i.e. there is no cache entry for the approximate input h, the method proceeds to step S603. Otherwise ("h=H(x) is not stored" is "false"), i.e. the approximate input h is stored in association with a respective output y and a respective status information SI as a cache entry 2 in the cache 2, the method proceeds to step S605. In step S603, the controller 1 requests the computation unit 3 to compute, for the input query x, an output comp_y and stores, as a cache entry 2a in the cache 2, the approximate input h in association with the respective output y and the respective state information SI. The respective output y is the computed output comp_y (y = comp_y) and the respective state information SI comprises a status flag SF and at least two slots SL each for storing an input query, wherein the status flag is variable between a valid state indicating that all of the slots are occupied and a processing state indicating that at least one of the slots is empty. In step S603, the controller 1 stores the input query x in an empty slot of the slots SL ("SL.add(x)") and sets the status flag SF to the processing state ("SF = PROCESSING"). As indicated in Figure 6 by the term "MISS", the step S602 resulting in the step S603 corresponds to a cache miss. Therefore, in the step S604 following the step S403, the controller 1 provides the computed output comp_y to the query unit 4 in response to the input query x received (in step S601) from the query unit 4. That is, in step S604, the controller 1 returns, for the input query x, the computed output comp_y. This providing/return may be performed at the same time or before the storing of the cache entry.

In step S605, the controller 1 determines whether the status flag SF of the respective state information SI of the cache entry equals to the valid state or not. In case, the status flag SF equals to the valid state ("SF == VALID" is "true"), the method proceeds to the step S607 and in case the status flag SF does not equal to the valid state ("SF == VALID" is "false"), the method proceeds to the step S606. In step S606, the controller 1 determines whether one of the at least two slots SL of the respective state information SI of the cache entry stores the input query x. In case one of the slots SL stores the input query x ("x in SL" is "true"), the method proceeds to the step S607 and in case no one of the slots SL stores the input query x ("x in SL" is "false"), the method proceeds to step S608. The steps S605 and S606 may be performed at the same time or in reverse order. In step S607 the controller 1 provides the respective output y of the cache entry to the query unit 4. This corresponds to a cache hit as indicated by the term "HIT" in Figure 6.

In step S608, the controller 1 stores the input query x in an empty slot of the slots SL and requests the computation unit 3 to compute, for the input query x, the output comp _y ("comp_y = F(x)").

Next, in step S609 following step S608, the controller 1 compares the computed output comp_y with the respective output y of the cache entry. In case the computed output comp_y does not equal to the respective output y of the cache entry ("y!= comp_y" is "true"), the method proceeds to step S610, in which the controller 1 deletes the cache entry, as indicated by the term "DELETE" in Figure 6. That is, in case the computed output comp_y does not equal to the respective output y of the cache entry, an error in the mapping between the approximate input h of the cache entry and the respective output of the cache entry has been detected for the received input query x and, thus, the cache entry is evicted respectively deleted. In case the computed output comp_y equals to the respective output y of the cache entry ("y!= comp_y" is "false"), the method proceeds to step S611, in which the controller 1 determines whether all of the slots SL of the cache entry are occupied. In case all the slots SL of the cache entry are occupied ("SL.is_full()" is "true"), the controller 1 sets the status flag SF to the valid state ("status = VALID"). When the status flag SF is set to the valid state, the controller 1 will not send anymore computation request to the computation unit for the current cache entry (because the next time the method of Figure 6 is applied to the current cache entry, the step S605 will yield a "yes"). Next the method proceeds to the step S613. In case all the slots SL of the cache entry are not occupied ("SL.is_full()" is "false"), i.e .at least one of the slots SL is empty, the method proceeds to step S613 and the status flag SF remains in the processing state. In step S613, the controller 1 provides the computed output comp_y to the query unit 4. This corresponds to a cache hit as indicated by the term "HIT" in Figure 6. The step S613 may be performed at the same time as the step S611 or S612, before the step S611 or before the step S612.

The method of step 6 may be referred to as "processing design" respectively "staging design". This design assumes that the mappings between the respective approximate input and the respective output of each of the discovered cache entries of the cache are in most cases not trustworthy, i.e. not valid respectively erroneous. This means that new cache entries in the cache have a validation period (may be called "processing period" or "staging period") during which error monitoring is performed. Cache entries are either promoted to a final valid state (cf. step S612 of Figure 6) or are deleted, i.e. evicted from the cache (cf. step S610 of Figure 6). in case the controller determines an error in the mapping between the approximate input of a cache entry and the respective output of the cache entry, for the receive input query (mapped to the approximate input of the cache entry). Once the validation period is closed, no more analytics are performed on the cache entry.

With regard thereto, for any cache entry of the cache, the status flag SF of the respective state information SI may be variable between a valid state ("VALID") and a processing state ("PROCEESING"). The valid state indicates that the validation of the cache entry is completed and the processing state indicates that the validation of the cache entry is not yet completed, i.e. still undergoing. For any cache entry of the cache, the at least two slots of the respective state information SI may store at least two distinct input queries that are received by the controller during the validation period.

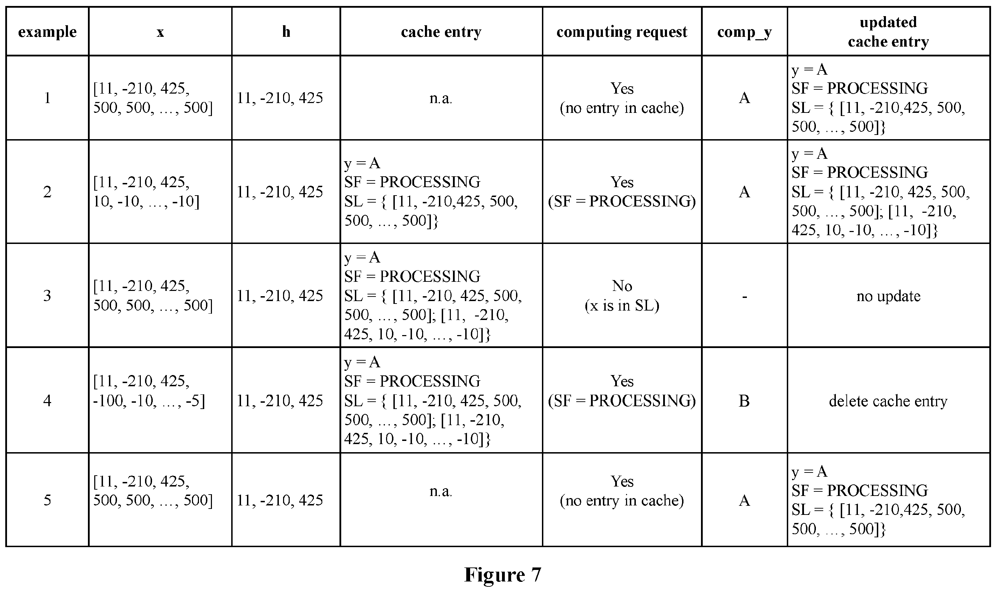

Figure 7 shows for the method of Figure 6 five examples of an input query, a respective approximate input and a cache entry of the cache for the respective approximate input as well as results of resulting method steps performed by the method. With regard to the examples 1 to 5 of Figure 7, it is assumed that for any cache entry the respective state information SI comprises three slots SL. This is only by way of example and does not limit the present disclosure.

The column "example" of the table of Figure 7 indicates the example number 1 to 5. The column "x" indicates an input query x received by the controller 1 in step S601 of the method of Figure 6. The column "h" indicates the approximate input h, which is determined by the controller 1 for the received input query x in step S601 of the method of Figure 6. The column "cache entry" indicates the values of the cache entry for the determined approximate input h, i.e. the values stored in association with the determined approximate input h as the cache entry. The abbreviation "n.a." indicates that there is no cache entry for the approximate input h. The column "computing request" indicates whether the controller requests in step S603 or S608 the computation unit to compute, for the received input query x, an output comp_y. The column "comp_y" indicates the computed output comp_y for the examples in which the controller sends a computation request to the computation unit 3 (i.e. the controller performs the step S603 or S608 of the method of Figure 6). The column "updated cache entry" indicates the values of the cache entry for the determined approximate input h, i.e. the values stored in association with the determined approximate input h as the cache entry, after the controller has performed the method of Figure 6 based on the received input query x.

According to the example 1, the controller receives as the input query the set (vector or array) [11, -210, 425, 500, 500, ..., 500]. It is assumed that the controller maps each input query comprising as the first three elements the elements [11, -210, 425] to the same approximate input h corresponding to [11, -210, 425]. In particular, the controller 1 may apply an approximate function H(x) to the received input query x = [11, -210, 425, 500, 500, ..., 500] to determine the respective approximate input h = [11, -210, 425]. The approximate function H(x) may be a prefix operation extracting the first three elements of the input query set respectively array. Further, it is assumed that the determined approximate input h is not stored in the cache 2. That is, there is no cache entry for the approximate input h (n.a.). Since in the example 1, the cache is empty (n.a.) the input query x = [11, -210, 425, 500, 500, ..., 500] results in a cache miss and, thus, the controller performs the steps S601 to S604. Thus, the controller invokes respectively requests the computation unit 3 to compute, for the received input query x, an output. As shown in Figure 7, for the example 1, the computed output comp_y is assumed to equal to A for the input query x = [11, -210, 425, 500, 500, ..., 500]. As a result, in the example 1 for the approximate input h = [11, -210, 425], the approximate input h is then stored in association with A as the respective output y. The status flag SF is set to the processing state (SF = PROCESSING) and the input query x is stored in an empty slot of the slots SL (SL = {[11, -210, 425, 500, 500, ..., 500]}. That is, the key of said cache entry corresponds to the approximate input h = [11, -210, 425] and the associated values correspond to the computed output A, the status flag SF set to the processing state and the three slots SL, wherein one of the three slots SL stores the input query x = [11, -210, 425, 500, 500, ..., 500]. The number of slots SL may be two or more than three and is only exemplarily chosen to equal to three for describing Figure 7. That is, this is not limiting the present disclosure.

The table of Figure 7 shows an evolution of the cache with several examples considering the following cases:
According to the example 2 of Figure 7, the input query x = [11, -210, 425, 10, -10, ..., -10] received by the controller 1 is stored in an empty slot of the three slots SL (i.e. is added to the slots SL), because the cache entry for the approximate input h = [11, -210, 425] does not comprise that input query x and the status flag SF is equal to the processing state (i.e. not equal to the valid state), when the controller receives that input query x. Thus, the method according to example 2 of Figure 7 comprises steps S602, S605, S606, S608, S609 and S611 of Figure 6, wherein a "false" is yielded in steps S602, S605, S606, S609 and S611.

According to the example 3 of Figure 7, the controller 1 determines that the received input query x = [11, -210, 425, 500, 500, ..., 500] is already stored in a slot of the three slots SL of the cache entry. That is, the controller 1 finds that received input query x in one of the slots SL of the cache entry. Thus, the method according to example 3 of Figure 7 comprises steps S602, S605 and S606 of Figure 6, wherein a "false" is yielded in steps S602 and S605 and a "true" is yielded in step S606.

According to the example 4 of Figure 7, the input query x = [11, -210, 425, -100, -10, ..., -5] received by the controller 1 is stored in an empty slot of the three slots SL (i.e. is added to the slots SL), because the cache entry for the approximate input h = [11, -210, 425] does not comprise that input query x and the status flag SF is equal to the processing state (i.e. not equal to the valid state), when the controller receives that input query x. Furthermore, the controller requests the computation unit to compute for the received input query x = [11, -210, 425, -100, -10, ..., -5] an output and compares the computed output comp_y with the respective output y of the cache entry. It is assumed that for the input query x = [11, -210, 425, -100, -10, ..., -5], the computed output comp_y is equal to B (comp_y = B). Therefore, the computed output comp_y does not equal to the respective output y of the cache entry that equals to A (y = A). Thus, the controller 1 detects an error in the mapping between the approximate input h of the cache entry and the respective output y of the cache entry for the received input query x = [11, - 210, 425, -100, -10, ..., -5]. As a result, the controller deletes the cache entry (i.e. triggers eviction). Thus, the method according to example 4 of Figure 7 comprises steps S602, S605, S606, S608, S609 and S610 of Figure 6, wherein a "false" is yielded in steps S602, S605 and S606 and a "true" is yielded in step S609.

As result of the deletion (cf. example 4), an input query x = [11, -210, 425, 500, 500, ..., 500] already received by the controller 1 (cf. example 1) needs to be re-evaluated by the controller by requesting the computation unit to compute for the received input query x = [11, -210, 425, 500, 500, ..., 500] an output (cf. example 5). The description of example 1 is correspondingly valid for the example 5 of Figure 7.

The above disclosure regarding the controller and cache may be applied in an artificial intelligence (AI) classification problem. As in any classification problem, the goal is to assign to a given input query a discrete output. That is, the input data corresponding to one or more input queries may be "labelled" based on a set of discrete classes.

In particular, the classification problem may be a classification problem for network traffic, namely traffic classification. Thus, the input queries x shown in the examples of the tables of Figures 5 and 7 each may be an array of n values (e.g. ten values) representing the size and direction (represented as the sign of the values) of the first n packets of a network flow, wherein n is a positive integer value. The integer value may be greater or equal to two (n ≥ 2), e.g. it may equal to ten (n = 10). For example, an input query may be an array like x = [100, -100, 300, 50, 1031, 501, 501, -40, -40, -40] (not shown as an example in Figures 5 and 7) and the respective output may be a value in the set {'youtube', 'netflix', 'skype', ...}. Thus, in this case the computation unit (which may be an analytics service) may be configured to apply an analytics function F(x) on the received input query to generate the output for the input query. In particular, the analytics function F(x) may be a deep learning model that has been trained to map the n values of the input query being an array to the associated output application label. The approximate function H(x) that may be used by the controller to generate the approximate input h for the received input query x may be a prefix operation extracting the first 3 packets of the available n packets of the input query. For the example above, i.e. x = [100, -100, 300, 50, 1031, 501, 501, -40, -40, -40], the approximate input h may, thus, to [100,-100, 300] (h = H(x) = [100, -100, 300]).

The aforementioned does not limit the present disclosure. That is the embodiments of Figures 2 to 7 are valid for any classification task (i.e. F(x) does not need to be a deep learning model, and can be any operation one applies on an input query) using the required input query (i.e., the input query x does not need to be an array of n values, e.g. 10 values), different set of labels (i.e., the labels do not need to be internet applications), and different approximate function (i.e., the prefix operation H(x) may be replaced with other operations that suit the processing required; it is the responsibility of the system designer to select the right function for the use-case).

The present disclosure provides a set of techniques to improve the performance of a cache, in particular an approximate cache, by reducing the fraction of errors caused by approximate caching.

The reduction of the fraction of errors matters in the implementation of network traffic analytics. For instance, considering the case where the computation unit is an analytics service in the form of an artificial intelligence (AI), in particular deep learning or machine learning, model. In this scenario, designers create models aiming to improve the accuracy (reduce the mislabeling) at the price of extra-memory (i.e. model complexity) and extra-training (i.e. lot or computational resources, and long execution time to obtain the model). In short, an AI model is intrinsically designed to limit the amount of errors it generates via its predictions.

However, when applying an approximate cache to speed up the model inference time (i.e. the time it takes to run the analytics), an extra error may be introduced due to the approximate caching, which was not considered in the design of the model itself. Hence, approximate caching without error control may result detrimental with respect to the effort done to train the model, and affect the quality of the prediction.

The controller of the present disclosure reduces the number of extra-errors brought by the caching system, in particular the approximate caching, which translates into performance for the whole analytics system.

The present disclosure has been described in conjunction with various embodiments as examples as well as implementations. However, other variations can be understood and effected by those persons skilled in the art and practicing the claimed subject matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A controller (1) for a cache (2), the cache (2) is configured to store one or more outputs of a computation unit (3), wherein
- the controller (1) is configured to map input queries to one or more approximate inputs, and
- for each of the one or more approximate inputs, the controller (1) is configured to store, in the cache (2), the approximate input (h) in association with a respective output (y) of the one or more outputs and a respective state information (SI) as a cache entry (2a), wherein
the respective state information (SI) comprises information for monitoring validity of a mapping of the approximate input (h) to the respective output (y) of the cache entry (2a), and
- two or more input queries (x₁, x₂, x₃; x₄, x₅) comprising at least one common characteristic are mapped to the same approximate input (h₁; h₂).

2. The controller (1) according to claim **1,** wherein
- the controller (1) is configured to monitor the validity of the mapping of the approximate input (h) to the respective output (y) of the cache entry (2a) based on the respective state information (SI) of the cache entry(2a).

3. The controller (1) according to claim 1 or 2, wherein
- in response to receiving an input query (x) mapped to the approximate input (h) of the cache entry (2a), the controller (1) is configured to, dependent on the respective state information (SI) of the cache entry (2a), request the computation unit (3) to compute, for the input query (x), an output of the one or more outputs.

4. The controller (1) according to any one of the previous claims, wherein
- the two or more input queries (x₁, x₂, x₃; x₄, x₅) are vectors each comprising two or more elements; wherein
- the at least one common characteristic of the two or more input queries (x₁, x₂, x₃; x₄, x₅) comprises or corresponds to one or more elements that are the same for each of the vectors, and/or
- the at least one common characteristic of the two or more input queries (x₁, x₂, x₃; x₄, x₅) comprises or corresponds to one or more elements that are the same for each of the vectors after performing at least one mathematical operation on each of the vectors.

5. The controller (1) according to any one of the previous claims, wherein the controller (1) is configured to
- receive (S401, S601) an input query (x) of the input queries from a query unit,
- determine (S401, S601), for the input query (x). an approximate input (h) of the one or more approximate inputs based on the mapping of the input queries to the one or more approximate inputs,
- determine (S402, S602) whether the approximate input is stored in the cache (2), and
- in case the approximate input is not stored in the cache (2), request the computation unit to compute, for the input query (x), an output (comp_y) of the one or more outputs, and store (S403, S603), as a cache entry in the cache (2), the approximate input (h) in association with the respective output (y) and the respective state information (SI), wherein the respective output (y) is the computed output (comp_y).

6. The controller (1) according to claim 5, wherein, in case the approximate input is stored as a cache entry in the cache (2), the controller (1) is configured to. depending on the respective state information (SI) of the cache entry,
- provide (S413, S607) the respective output (y) of the cache entry to the query unit, or
- request (S406, S608) the computation unit (3) to compute, for the input query (x), an output (comp_y) of the one or more outputs and compare (S407, S609) the computed output (comp_y) with the respective output (y) of the cache entry.

7. The controller (1) according to claim 6, wherein the controller (1) is configured to
- provide (S411, S613) the respective output of the cache entry to the query unit, in case the respective output (y) of the cache entry equals to the computed output (comp_y),
- overwrite (S409) the respective output (y) of the cache entry with the computed output (comp_y) and provide (S411) the computed output (comp_y) to the query unit, in case the respective output (y) of the cache entry does not equal to the computed output (comp_y), or
- delete (S610) the cache entry, in case the respective output (y) of the cache entry does not equal to the computed output (comp_y).

8. The controller (1) according to any one of claims 6 to 7, wherein
- the respective state information (SI) of the cache entry comprises a query counter (QC) and a query threshold (QT), and
- the controller (1) is configured to set the query counter (QC) to an initial counter value and the query threshold (QT) to an initial threshold, when storing (S403), as the cache entry in the cache (2), the approximate input (h) in association with the respective output (y) and the respective state information (SI).

9. The controller (1) according to claim 8 when depending on claim 6, wherein
- the controller (1) is configured to provide (S413) the respective output (y) of the cache entry to the query unit and increment (S412) the query counter (QC) by one, in case the query counter (QC) does not equal to the query threshold (QT).

10. The controller (1) according to claim 8 or 9 when depending on claim 6, wherein
- the controller (1) is configured to request (S406) the computation unit (3) to compute, for the input query, the output (comp_y), compare the computed output (comp_y) with the respective output (y) of the cache entry, set (S410) the query counter (QC) to the initial counter value and update (S408, S409) the query threshold (QT), in case the query counter (QC) equals to the query threshold (QT).

11. The controller (1) according to claim 10, wherein the controller (1) is configured to
- update the query threshold (QT) by incrementing (S408) the query threshold (QT) and provide (S411) the respective output (y) of the cache entry to the query unit, in case the respective output (y) of the cache entry equals to the computed output (comp_y), and
- update the query threshold (QT) by setting (S409) the query threshold (QT) to the initial threshold, overwrite (S409) the respective output (y) of the cache entry with the computed output (comp_y) and provide (S411) the computed output (comp_y) to the query unit, in case the respective output (y) of the cache entry does not equal to the computed output (comp_y).

12. The controller (1) according to any one of claims 6 to 11, wherein
- the respective state information (SI) of the cache entry comprises a status flag (SF) and at least two slots (SL) each for storing an input query, wherein the status flag (SF) is variable between a valid state indicating that all of the slots are occupied and a processing state indicating that at least one of the slots is empty, and
- the controller (1) is configured to store the input query (x) in an empty slot of the slots (SL) and set the flag (SF) to the processing state, when storing (S603), as the cache entry in the cache (2), the approximate input (h) in association with the respective output (y) and the respective state information (SI).

13. The controller (1) according to claim 12 when depending on claim 6, wherein
- the controller (1) is configured to request (S608) the computation unit to compute, for the input query (x), the output (comp_y), compare (S609) the computed output (comp_y) with the respective output (y) of the cache entry, and store the input query (x) in an empty slot of the slots (SL), in case the status flag (SF) does not equal to the valid state and no one of the slots (SL) stores the input query.

14. The controller (1) according to any one of claims 12 to 13 when depending on claim 6, wherein the controller (1) is configured to
- set (S612) the status flag (SF) to the valid state and provide (S613) the respective output (y) of the cache entry to the query unit, in case the respective output (y) of the cache entry equals to the computed output (comp_y) and all of the slots (SL) are occupied, and
- delete (S610) the cache entry, in case the respective output (y) of the cache entry does not equal to the computed output (comp_y).

15. A method for controlling a cache (2), wherein
- the method comprises the step of mapping input queries to one or more approximate inputs; and
- for each of the one or more approximate inputs, the method comprises the step of storing, in the cache (2), the approximate input (h) in association with a respective output (y) of a computation unit (3) and a respective state information (SI) as a cache entry (2a),
wherein the respective state information (SI) comprises information for monitoring validity of a mapping of the approximate input (h) to the respective output (y) of the cache entry (2a), and
- two or more input queries (x₁, x₂, x₃; x₄, x₅) comprising at least one common characteristic are mapped to the same approximate input (h₁; h₂).

## Patentansprüche

1. Steuerung (1) für einen Cache (2), wobei der Cache (2) konfiguriert ist, um eine oder mehrere Ausgaben einer Recheneinheit (3) zu speichern, wobei
- die Steuerung (1) konfiguriert ist, um Eingabeabfragen einer oder mehreren approximativen Eingaben zuzuordnen, und
- für jede der einen oder mehreren approximativen Eingaben die Steuerung (1) konfiguriert ist, um in dem Cache (2) Folgendes zu speichern,
die approximative Eingabe (h) in Verbindung mit einer jeweiligen Ausgabe (y) der einen oder der mehreren Ausgaben und einer jeweiligen Zustandsinformation (SI) als Cache-Eintrag (2a), wobei
die jeweilige Zustandsinformation (SI) Informationen zum Überwachen der Gültigkeit einer Zuordnung der approximativen Eingabe (h) zu der jeweiligen Ausgabe (y) des Cache-Eintrags (2a) umfasst, und
- zwei oder mehr Eingabeabfragen (x₁, x₂, x₃; x₄, x₅), die mindestens eine gemeinsame Charakteristik umfassen, derselben approximativen Eingabe (h₁; h₂) zugeordnet sind.

2. Steuerung (1) nach Anspruch 1, wobei
- die Steuerung (1) konfiguriert ist, um die Gültigkeit der Zuordnung der approximativen Eingabe (h) zu der jeweiligen Ausgabe (y) des Cache-Eintrags (2a) basierend auf der jeweiligen Zustandsinformation (SI) des Cache-Eintrags (2a) zu überwachen.

3. Steuerung (1) nach Anspruch 1 oder 2, wobei
- als Reaktion auf ein Empfangen einer Eingabeabfrage (x), die der approximativen Eingabe (h) des Cache-Eintrags (2a) zugeordnet wird, die Steuerung (1) konfiguriert ist, um in Abhängigkeit von der jeweiligen Zustandsinformation (SI) des Cache-Eintrags (2a) die Recheneinheit (3) aufzufordern, für die Eingabeabfrage (x) eine Ausgabe der einen oder mehreren Ausgaben zu berechnen.

4. Steuerung (1) nach einem der vorstehenden Ansprüche, wobei
- die zwei oder mehr Eingabeabfragen (x₁, x₂, x₃; x₄, x₅) Vektoren sind, die jeweils zwei oder mehr Elemente umfassen; wobei
- die mindestens eine gemeinsame Charakteristik der zwei oder mehr Eingabeabfragen (x₁, x₂, x₃; x₄, x₅) ein oder mehrere Elemente, die für jeden der Vektoren gleich sind, umfasst oder diesen entspricht, und/oder
- die mindestens eine gemeinsame Charakteristik der zwei oder mehr Eingabeabfragen (x₁, x₂, x₃; x₄, x₅) ein oder mehrere Elemente, die für jeden der Vektoren nach einem Durchführen mindestens einer mathematischen Operation an jedem der Vektoren gleich sind, umfasst oder diesen entspricht.

5. Steuerung (1) nach einem der vorstehenden Ansprüche, wobei die Steuerung (1) konfiguriert ist zum
- Empfangen (S401, S601) einer Eingabeabfrage (x) der Eingabeabfragen von einer Abfrageeinheit,
- Bestimmen (S401, S601), für die Eingabeabfrage (x), einer approximativen Eingabe (h) der einen oder der mehreren approximativen Eingaben basierend auf der Zuordnung der Eingabeabfragen zu den einen oder den mehreren approximativen Eingaben,
- Bestimmen (S402, S602), ob die approximative Eingabe in dem Cache (2) gespeichert ist, und
- falls die approximative Eingabe nicht in dem Cache (2) gespeichert ist, Auffordern der Recheneinheit, für die Eingabeabfrage (x) eine Ausgabe (comp_y) der einen oder der mehreren Ausgaben zu berechnen, und als Cache-Eintrag in dem Cache (2) die approximative Eingabe (h) in Verbindung mit der jeweiligen Ausgabe (y) und der jeweiligen Zustandsinformation (SI) zu speichern (S403, S603), wobei die jeweilige Ausgabe (y) die berechnete Ausgabe (comp_y) ist.

6. Steuerung (1) nach Anspruch 5, wobei, falls die approximative Eingabe als Cache-Eintrag in dem Cache (2) gespeichert ist, die Steuerung (1) in Abhängigkeit von der jeweiligen Zustandsinformation (SI) des Cache-Eintrags konfiguriert ist zum
- Bereitstellen (S413, S607) der jeweiligen Ausgabe (y) des Cache-Eintrags an die Abfrageeinheit, oder
- Auffordern (S406, S608) der Recheneinheit (3), für die Eingabeabfrage (x) eine Ausgabe (comp_y) zu berechnen aus
der einen oder den mehreren Ausgaben und Vergleichen (S407, S609) der berechneten Ausgabe (comp_y) mit der jeweiligen Ausgabe (y) des Cache-Eintrags.

7. Steuerung (1) nach Anspruch 6, wobei die Steuerung (1) konfiguriert ist zum
- Bereitstellen (S411, S613) der jeweiligen Ausgabe des Cache-Eintrags an die Abfrageeinheit, falls die jeweilige Ausgabe (y) des Cache-Eintrags gleich der berechneten Ausgabe (comp_y) ist,
- Überschreiben (S409) der jeweiligen Ausgabe (y) des Cache-Eintrags mit der berechneten Ausgabe (comp_y) und Bereitstellen (S411) der berechneten Ausgabe (comp_y) an die Abfrageeinheit, falls die jeweilige Ausgabe (y) des Cache-Eintrags nicht gleich der berechneten Ausgabe (comp_y) ist, oder
- Löschen (S610) des Cache-Eintrags, falls die jeweilige Ausgabe (y) des Cache-Eintrags nicht gleich der berechneten Ausgabe (comp_y) ist.

8. Steuerung (1) nach einem der Ansprüche 6 bis 7, wobei
- die jeweilige Zustandsinformation (SI) des Cache-Eintrags einen Abfragezähler (QC) und einen Abfrageschwellenwert (QT) umfasst, und
- die Steuerung (1) konfiguriert ist, um den Abfragezähler (QC) auf einen anfänglichen Zählerwert und den Abfrageschwellenwert (QT) auf einen anfänglichen Schwellenwert zu setzen, wenn die approximative Eingabe (h) in Verbindung mit der jeweiligen Ausgabe (y) und der jeweiligen Zustandsinformation (SI) als der Cache-Eintrag in dem Cache (2) gespeichert (S403) wird.

9. Steuerung (1) nach Anspruch 8, wenn abhängig von Anspruch 6, wobei
- die Steuerung (1) konfiguriert ist, um der Abfrageeinheit die jeweilige Ausgabe (y) des Cache-Eintrags bereitzustellen (S413) und den Abfragezähler (QC) um eins zu inkrementieren (S412), falls der Abfragezähler (QC) nicht gleich dem Abfrageschwellenwert (QT) ist.

10. Steuerung (1) nach Anspruch 8 oder 9, wenn abhängig von Anspruch 6, wobei
- die Steuerung (1) konfiguriert ist, um die Recheneinheit (3) aufzufordern (S406), für die Eingabeabfrage die Ausgabe (comp_y) zu berechnen, die berechnete Ausgabe (comp_y) mit der jeweiligen Ausgabe (y) des Cache-Eintrags zu vergleichen, den Abfragezähler (QC) auf den anfänglichen Zählerwert zu setzen (S410) und den Abfrageschwellenwert (QT) zu aktualisieren (S408, S409), falls der Abfragezähler (QC) gleich dem Abfrageschwellenwert (QT) ist.

11. Steuerung (1) nach Anspruch 10, wobei die Steuerung (1) konfiguriert ist zum
- Aktualisieren des Abfrageschwellenwerts (QT) durch Inkrementieren (S408) des Abfrageschwellenwerts (QT) und Bereitstellen (S411) der jeweiligen Ausgabe (y) des Cache-Eintrags an die Abfrageeinheit, falls die jeweilige Ausgabe (y) des Cache-Eintrags gleich der berechneten Ausgabe (comp_y) ist, und
- Aktualisieren des Abfrageschwellenwerts (QT) durch Setzen (S409) des Abfrageschwellenwerts (QT) auf den anfänglichen Schwellenwert, Überschreiben (S409) der jeweiligen Ausgabe (y) des Cache-Eintrags mit der berechneten Ausgabe (comp_y) und Bereitstellen (S411) der berechneten Ausgabe (comp_y) an die Abfrageeinheit, falls die jeweilige Ausgabe (y) des Cache-Eintrags nicht gleich der berechneten Ausgabe (comp_y) ist.

12. Steuerung (1) nach einem der Ansprüche 6 bis 11, wobei
- die jeweilige Zustandsinformation (SI) des Cache-Eintrags ein Statusflag (SF) und mindestens zwei Slots (SL), die jeweils zum Speichern einer Eingabeabfrage dienen, umfasst, wobei das Statusflag (SF) zwischen einem gültigen Zustand, der anzeigt, dass alle Slots belegt sind, und einem Verarbeitungszustand, der anzeigt, dass mindestens einer der Slots leer ist, variabel ist, und
- die Steuerung (1) konfiguriert ist, um die Eingabeabfrage (x) in einem leeren Slot der Slots (SL) zu speichern und das Flag (SF) auf den Verarbeitungszustand zu setzen, wenn die approximative Eingabe (h) in Verbindung mit der jeweiligen Ausgabe (y) und der jeweiligen Zustandsinformation (SI) als der Cache-Eintrag in dem Cache (2) gespeichert (S603) wird.

13. Steuerung (1) nach Anspruch 12, wenn abhängig von Anspruch 6, wobei
- die Steuerung (1) konfiguriert ist, um die Recheneinheit aufzufordern (S608), für die Eingabeabfrage (x) die Ausgabe (comp_y) zu berechnen, die berechnete Ausgabe (comp_y) mit der jeweiligen Ausgabe (y) des Cache-Eintrags zu vergleichen (S609) und die Eingabeabfrage (x) in einem leeren Slot der Slots (SL) zu speichern, falls das Statusflag (SF) nicht gleich dem gültigen Zustand ist und keiner der Slots (SL) die Eingabeabfrage speichert.

14. Steuerung (1) nach einem der Ansprüche 12 bis 13, wenn abhängig von Anspruch 6, wobei die Steuerung (1) konfiguriert ist zum
- Setzen (S612) des Statusflags (SF) auf den gültigen Zustand und Bereitstellen (S613) der jeweiligen Ausgabe (y) des Cache-Eintrags an die Abfrageeinheit, falls die jeweilige Ausgabe (y) des Cache-Eintrags gleich der berechneten Ausgabe (comp_y) ist und alle Slots (SL) belegt sind, und
- Löschen (S610) des Cache-Eintrags, falls die jeweilige Ausgabe (y) des Cache-Eintrags nicht gleich der berechneten Ausgabe (comp_y) ist.

15. Verfahren zum Steuern eines Cache (2), wobei
- das Verfahren den Schritt des Zuordnens von Eingabeabfragen zu einer oder mehreren approximativen Eingaben umfasst; und
- für jede der einen oder der mehreren approximativen Eingaben das Verfahren den Schritt des Speicherns der approximativen Eingabe (h) in Verbindung mit einer jeweiligen Ausgabe (y) einer Recheneinheit (3) und einer jeweiligen Zustandsinformation (SI) als Cache-Eintrag (2a) in dem Cache (2) umfasst,
wobei die jeweilige Zustandsinformation (SI) Informationen zum Überwachen der Gültigkeit einer Zuordnung der approximativen Eingabe (h) zu der jeweiligen Ausgabe (y) des Cache-Eintrags (2a) umfasst, und
- zwei oder mehr Eingabeabfragen (x₁, x₂, x₃; x₄, x₅), die mindestens eine gemeinsame Charakteristik umfassen, derselben approximativen Eingabe (h₁; h₂) zugeordnet sind.

## Revendications

1. Dispositif de commande (1) pour une mémoire cache (2), la mémoire cache (2) est configurée pour stocker une ou plusieurs sorties d'une unité de calcul (3), dans lequel
- le dispositif de commande (1) est configuré pour mettre en correspondance des requêtes de saisie avec une ou plusieurs saisies approximatives, et
- pour chacune de la ou des saisies approximatives, le dispositif de commande (1) est configuré pour stocker, dans la mémoire cache (2),
la saisie approximative (h) en association avec une sortie respective (y) de la ou des sorties et des informations d'état (SI) respectives en tant qu'entrée de mémoire cache (2a), dans lequel
les informations d'état (SI) respectives comprennent des informations permettant de surveiller une validité d'une mise en correspondance entre la saisie approximative (h) et la sortie respective (y) de l'entrée de mémoire cache (2a), et
- deux requêtes de saisie ou plus (x₁, x₂, x₃ ; x₄, x₅) comprenant au moins une caractéristique commune sont mises en correspondance avec la même saisie approximative (h₁ ; h₂).

2. Dispositif de commande (1) selon la revendication 1, dans lequel
- le dispositif de commande (1) est configuré pour surveiller la validité de la mise en correspondance de la saisie approximative (h) avec la sortie respective (y) de l'entrée de mémoire cache (2a) sur la base des informations d'état (SI) respectives de l'entrée de mémoire cache (2a).

3. Dispositif de commande (1) selon la revendication 1 ou 2, dans lequel
- en réponse à la réception d'une requête de saisie (x) mise en correspondance avec la saisie approximative (h) de l'entrée de mémoire cache (2a), le dispositif de commande (1) est configuré pour, en fonction des informations d'état (SI) respectives de l'entrée de mémoire cache (2a), demander à l'unité de calcul (3) de calculer, pour la requête de saisie (x), une sortie parmi la ou les sorties.

4. Dispositif de commande (1) selon l'une quelconque des revendications précédentes, dans lequel
- les deux requêtes de saisie ou plus (x₁, x₂, x₃ ; x₄, x₅) sont des vecteurs comprenant chacun deux éléments ou plus ; dans lequel
- l'au moins une caractéristique commune des deux requêtes de saisie ou plus (x₁, x₂, x₃ ; x₄, x₅) comprend ou correspond à un ou plusieurs éléments qui sont identiques pour chacun des vecteurs, et/ou
- l'au moins une caractéristique commune des deux requêtes de saisie ou plus (x₁, x₂, x₃ ; x₄, x₅) comprend ou correspond à un ou plusieurs éléments qui sont identiques pour chacun des vecteurs après avoir réalisé au moins une opération mathématique sur chacun des vecteurs.

5. Dispositif de commande (1) selon l'une quelconque des revendications précédentes, dans lequel le dispositif de commande (1) est configuré pour
- recevoir (S401, S601) une requête de saisie (x) parmi les requêtes de saisie en provenance d'une unité de requête,
- déterminer (S401, S601), pour la requête de saisie (x), une saisie approximative (h) parmi la ou les saisies approximatives sur la base de la mise en correspondance des requêtes de saisie avec la ou les saisies approximatives,
- déterminer (S402, S602) si la saisie approximative est stockée dans la mémoire cache (2), et
- dans le cas où la saisie approximative n'est pas stockée dans la mémoire cache (2), demander à l'unité de calcul de calculer, pour la requête de saisie (x), une sortie (comp_y) parmi la ou les sorties, et stocker (S403, S603), en tant qu'entrée de mémoire cache (2), la saisie approximative (h) en association avec la sortie respective (y) et les informations d'état (SI) respectives, dans lequel la sortie respective (y) est la sortie calculée (comp_y).

6. Dispositif de commande (1) selon la revendication 5, dans lequel, dans le cas où la saisie approximative est stockée en tant qu'entrée de mémoire cache dans la mémoire cache (2), le dispositif de commande (1) est configuré pour, en fonction des informations d'état (SI) respectives de l'entrée de mémoire cache,
- fournir (S413, S607) la sortie respective (y) de l'entrée de mémoire cache à l'unité de requête, ou
- demander (S406, S608) à l'unité de calcul (3) de calculer, pour la requête de saisie (x), une sortie (comp_y) de
la ou des sorties et comparer (S407, S609) la sortie calculée (comp_y) avec la sortie respective (y) de l'entrée de mémoire cache.

7. Dispositif de commande (1) selon la revendication 6, dans lequel le dispositif de commande (1) est configuré pour
- fournir (S411, S613) la sortie respective de l'entrée de mémoire cache à l'unité de requête, dans le cas où la sortie respective (y) de l'entrée de mémoire cache est égale à la sortie calculée (comp_y),
- écraser (S409) la sortie respective (y) de l'entrée de mémoire cache avec la sortie calculée (comp_y) et fournir (S411) la sortie calculée (comp_y) à l'unité de requête, dans le cas où la sortie respective (y) de l'entrée de mémoire cache n'est pas égale à la sortie calculée (comp_y), ou
- supprimer (S610) l'entrée de mémoire cache, dans le cas où la sortie respective (y) de l'entrée de mémoire cache n'est pas égale à la sortie calculée (comp_y).

8. Dispositif de commande (1) selon l'une quelconque des revendications 6 à 7, dans lequel
- les informations d'état (SI) respectives de l'entrée de mémoire cache comprennent un compteur de requêtes (QC) et un seuil de requêtes (QT), et
- le dispositif de commande (1) est configuré pour régler le compteur de requêtes (QC) sur une valeur de compteur initiale et le seuil de requêtes (QT) sur un seuil initial, lors du stockage (S403), en tant qu'entrée de mémoire cache dans la mémoire cache (2), de la saisie approximative (h) en association avec la sortie respective (y) et les informations d'état (SI) respectives.

9. Dispositif de commande (1) selon la revendication 8, lorsqu'elle dépend de la revendication 6, dans lequel
- le dispositif de commande (1) est configuré pour fournir (S413) la sortie respective (y) de l'entrée de mémoire cache à l'unité de requête et incrémenter (S412) le compteur de requêtes (QC) d'un, dans le cas où le compteur de requêtes (QC) n'est pas égal au seuil de requêtes (QT).

10. Dispositif de commande (1) selon la revendication 8 ou 9, lorsqu'elle dépend de la revendication 6, dans lequel
- le dispositif de commande (1) est configuré pour demander (S406) à l'unité de calcul (3) de calculer, pour la requête de saisie, la sortie (comp_y), comparer la sortie calculée (comp_y) avec la sortie respective (y) de l'entrée de mémoire cache,
régler (S410) le compteur de requêtes (QC) sur la valeur de compteur initiale et mettre à jour (S408, S409) le seuil de requêtes (QT), dans le cas où le compteur de requêtes (QC) est égal au seuil de requêtes (QT).

11. Dispositif de commande (1) selon la revendication 10, dans lequel le dispositif de commande (1) est configuré pour
- mettre à jour le seuil de requêtes (QT) en incrémentant (S408) le seuil de requêtes (QT) et fournir (S411) la sortie respective (y) de l'entrée de mémoire cache à l'unité de requête, dans le cas où la sortie respective (y) de l'entrée de mémoire cache est égale à la sortie calculée (comp_y), et
- mettre à jour le seuil de requêtes (QT) en réglant (S409) le seuil de requêtes (QT) sur le seuil initial, écraser (S409) la sortie respective (y) de l'entrée de mémoire cache par la sortie calculée (comp_y) et fournir (S411) la sortie calculée (comp_y) à l'unité de requête, dans le cas où la sortie respective (y) de l'entrée de mémoire cache n'est pas égale à la sortie calculée (comp_y).

12. Dispositif de commande (1) selon l'une quelconque des revendications 6 à 11, dans lequel
- les informations d'état (SI) respectives de l'entrée de mémoire cache comprennent un indicateur d'état (SF) et au moins deux créneaux (SL) destinés chacun à stocker une requête de saisie, dans lequel l'indicateur d'état (SF) est variable entre un état valide indiquant que tous les créneaux sont occupés et un état de traitement indiquant qu'au moins l'un parmi les créneaux est vide, et
- le dispositif de commande (1) est configuré pour stocker la requête de saisie (x) dans un créneau vide parmi les créneaux (SL) et régler l'indicateur (SF) sur l'état de traitement, lors du stockage (S603), en tant qu'entrée de mémoire cache dans la mémoire cache (2), de la saisie approximative (h) en association avec la sortie respective (y) et les informations d'état (SI) respectives.

13. Dispositif de commande (1) selon la revendication 12, lorsqu'elle dépend de la revendication 6, dans lequel
- le dispositif de commande (1) est configuré pour demander (S608) à l'unité de calcul de calculer, pour la requête de saisie (x), la sortie (comp_y), comparer (S609) la sortie calculée (comp_y) avec la sortie respective (y) de l'entrée de mémoire cache, et stocker la requête de saisie (x) dans un créneau vide parmi les créneaux (SL), dans le cas où l'indicateur d'état (SF) n'est pas égal à l'état valide et qu'aucun des créneaux (SL) ne stocke la requête de saisie.

14. Dispositif de commande (1) selon l'une quelconque des revendications 12 à 13, lorsqu'elle dépend de la revendication 6, dans lequel le dispositif de commande (1) est configuré pour
- régler (S612) l'indicateur d'état (SF) sur l'état valide et fournir (S613) la sortie respective (y) de l'entrée de mémoire cache à l'unité de requête, dans le cas où la sortie respective (y) de l'entrée de mémoire cache est égale à la sortie calculée (comp_y) et tous les créneaux (SL) sont occupés, et
- supprimer (S610) l'entrée de mémoire cache, dans le cas où la sortie respective (y) de l'entrée de mémoire cache n'est pas égale à la sortie calculée (comp_y).

15. Procédé permettant de commander une mémoire cache (2), dans lequel
- le procédé comprend l'étape consistant à mettre en correspondance des requêtes de saisie avec une ou plusieurs saisies approximatives ; et
- pour chacune de la ou des saisies approximatives, le procédé comprend l'étape consistant à stocker, dans la mémoire cache (2), la saisie approximative (h) en association avec une sortie respective (y) d'une unité de calcul (3) et des informations d'état (SI) respectives en tant qu'entrée de mémoire cache (2a),
dans lequel les informations d'état (SI) respectives comprennent des informations permettant de surveiller une validité d'une mise en correspondance entre la saisie approximative (h) et la sortie respective (y) de l'entrée de mémoire cache (2a), et
- deux requêtes de saisie ou plus (x₁, x₂, x₃ ; x₄, x₅) comprenant au moins une caractéristique commune sont mises en correspondance avec la même saisie approximative (h₁ ; h₂).
